# EUROPEAN PATENT APPLICATION

(11) **EP 3 474 252 A1**
(43) Date of publication of application: **24.04.2019**
(21) Application number: 18200562.9
(22) Date of filing: 15.10.2018
(51) Int. Cl.: G08G 1/04, G08G 1/00, B60R 11/04, B60R 13/10, G06K 9/00, G06Q 40/08, G08G 1/16

(54) **INTEGRATING VEHICLE ALARMS, CAMERAS, AND MOBILE DEVICES**

(30) Priority: 14.10.2017 US 201762572450 P
(71) Applicant: HueCore, Inc., Yonkers, NY 10701 (US); Reyes, Joel, Yonkers, NY 10701 (US); Feliz, Harvey, Yonkers, NY 10701 (US)
(72) Inventor: REYES, Joel, Yonkers, NY New York 10701 (US); RIVERA, Luis, Yonkers, NY New York 10701 (US)
(74) Representative: Nicolle, Frederick Joseph

(57) **Abstract**

A license plate frame includes an electronic device and a camera, such that the camera can capture images in front of or behind a vehicle. The electronic device determines that a collision has occurred between the vehicle with the license plate frame and another vehicle using motion detectors, accelerometer, camera, or other device/sensor. The camera captures video or images of the other vehicle, including the license plate of the other vehicle. In this way, if an owner of a vehicle is not present when a collision occurs (e.g., the car is parked on a street), the owner can determine information about a vehicle that caused the collision. That information may also be utilized to file police reports, submit insurance claims, and generate leads for vehicle repair. The license plate frame also includes a locking mechanism to ensure that only an authorized party can remove the license plate frame.

## Description

### CROSS-REFERENCE TO RELATED PATENT APPLICATION

This application claims the benefit of U.S. Provisional Patent Application No. 62/572,450, filed October 14, 2017, the entire contents of which are hereby incorporated by reference in their entirety.

### BACKGROUND

Various types of vehicles are ubiquitous today. Vehicles such as trucks are used to move goods and people all over the world. Some purchase vehicles for pleasure, others for utility. Vehicles are utilized in sports, such as auto racing. Various types of vehicles also exist, including electric vehicles, gasoline powered vehicles, and hybrid vehicles.

### SUMMARY

An illustrative method includes determining, by at least one processor of an electronic device associated with a first vehicle, that a collision has occurred between the first vehicle and a second vehicle. The method further includes capturing, by a camera associated with the first vehicle, at least one image of the second vehicle. The method further includes transmitting, by the at least one processor, a message to a client electronic device associated with the first vehicle in response to the determination that the collision has occurred. The message comprises the at least one image of the second vehicle.

An illustrative apparatus includes a memory, at least one processor operatively coupled to the memory, and a set of instructions stored on the memory and configured to be executed by the at least one processor. The set of instructions causes the at least one processor to determine that a collision has occurred between a first vehicle and a second vehicle. The set of instructions further causes the at least one processor to capture, by a camera associated with the first vehicle, at least one image of the second vehicle. The set of instructions further causes the at least one processor to transmit a message to a client electronic device associated with the first vehicle in response to the determination that the collision has occurred. The message comprises the at least one image of the second vehicle.

An illustrative system includes a vehicle electronic device and a client electronic device. The vehicle electronic device determines that a collision has occurred between a first vehicle and a second vehicle. The vehicle electronic device is on or in the first vehicle. The vehicle electronic device further captures, by a camera, at least one image of the second vehicle. The vehicle electronic device further transmits a first message to the client electronic device associated with the first vehicle in response to the determination that the collision has occurred. The first message includes the at least one image of the second vehicle. The client electronic device receives the first message from the vehicle electronic device. The client electronic device further receives, via an interface, an input requesting that an insurance claim be initiated, he client electronic device further transmits, in response to the input, a second message to an insurer electronic device. The second message comprises the at least one image and data for initiating an insurance claim.

A license plate frame apparatus configured to attach to a first vehicle including a license plate receiving portion configured to house a license plate of the first vehicle. The license plate frame apparatus further includes an electronic device housing configured not to block information displayed by the license plate of the first vehicle within the license plate receiving portion. The electronic device housing encloses at least a camera, a memory, at least one processor operatively coupled to the memory, and a set of instructions stored on the memory and configured to be executed by the at least one processor to cause the at least one processor to determine that a collision has occurred between the first vehicle and a second vehicle. The instructions further cause the at least one processor to capture, by the camera, at least one image of the second vehicle. The instructions further cause the at least one processor to transmit a message to a hub electronic device of the first vehicle in response to the determination that the collision has occurred. The message comprises the at least one image of the second vehicle.

### BRIEF DESCRIPTION OF THE DRAWINGS

FIG. 1A is a schematic diagram of an example system for integrating vehicle alarms, cameras, and mobile devices, in embodiments.
FIGS. 1B and 1C are schematic diagrams of examples of detecting proximity of vehicles in front of and behind a vehicle, in embodiments.
FIG. 2 is an example of a license plate frame with various electronic components, in embodiments.
FIG. 3 is an example of a front view of a license plate frame without electronic components, in embodiments.
FIG. 4 is an example of a rear view of the license plate frame of FIG. 3, in embodiments.
FIG. 5 is an example of a rear view of the license plate frame of FIGS. 4 and 5 with electronic components, in embodiments.
FIG. 6 is a functional block diagram illustrating an example license plate frame electronic device, in embodiments.
FIG. 7 is a flow chart illustrating an example method of capturing video of a collision and transmitting video of the collision, in embodiments.
FIG. 8 is a schematic diagram of an example of a license plate frame base with a locking mechanism for securing a license plate frame, in embodiments.
FIG. 9 is a schematic diagram of an example of a license plate frame with a locking mechanism for securing to the license plate frame base of FIG. 8, in embodiments.
FIG. 10 is a schematic diagram of an example of details of the locking mechanisms of FIGS. 8 and 9, in embodiments.
FIGS. 11A-11E are schematic diagrams of examples of the functionality of the locking mechanisms of FIGS. 8-10, in embodiments.
FIG. 12 is a flow chart illustrating an example method of unlocking a license plate frame, in embodiments.
FIG. 13 is a schematic diagram of an example of a hub electronic device capable of electronically connecting to an on-board diagnostic (OBD) port of a vehicle, in embodiments.
FIG. 14 is a functional block diagram illustrating an example hub electronic device capable of electronically connecting to an on-board diagnostic (OBD) port of a vehicle, in embodiments.
FIG. 15 is an example user interface displaying information about a collision on a client electronic device, in embodiments.
FIG. 16 is an example user interface displaying additional available features, in embodiments.
FIG. 17 is a flow chart illustrating an example method of initiating an insurance claim, in embodiments.
FIG. 18 is an example user interface for a vehicle maintenance/service organization, in embodiments.
FIG. 19 is a flow chart illustrating an example method of determining available parking spots, in embodiments.
FIG. 20 is a diagrammatic view of an example user computing environment, according to some embodiments.

### DETAILED DESCRIPTION

Various embodiments described herein relate to built-in sensors and cameras for a vehicle, such as may be included within a vehicle license plate frame. The sensors and cameras may integrate with the vehicle's alarm system to utilize the vehicle's horn and lights to alert nearby drivers. For example, when a vehicle is parked, the parked vehicle's horn and/or lights may be activated to warn a nearby driver that the driver's vehicle is getting too close to the parked vehicle. If an accident such as a collision occurs, data regarding the accident may be conveyed via a mobile device to various recipients, which may include, for example, the vehicle's owner, the insurance company that insures the vehicle, and/or the local police. This transferred data may include a video of the accident. The video of the accident may further include at least one image (e.g., at least one single frame of the video) of the license plate of the offending vehicle that caused the collision.

An example license plate frame includes an electronic device and a camera, such that the camera can capture images in front of or behind a vehicle. The electronic device determines that a collision has occurred between the vehicle with the license plate frame and another vehicle using motion detectors, accelerometer, camera, or other device/sensor. The camera captures video or images of the other vehicle, including the license plate of the other vehicle. In this way, if an owner of a vehicle is not present when a collision occurs (e.g., the car is parked on a street), the owner can determine information about a vehicle that caused the collision. That information may also be utilized to file police reports, submit insurance claims, and generate leads for vehicle repair. The license plate frame also includes a locking mechanism to ensure that only an authorized party can remove the license plate frame.

Various embodiments described herein solve problems related to vehicle collisions. For example, a problem of collisions with parked cars is widespread and expensive. In New York alone, nearly 38,000 parked car collisions were reported in 2015. Of these incidents, approximately 34,000 were hit-and-runs that resulted in a minimum total of $17 million in damage costs. Various data relating to collision claims show that insurance companies pay out averages of $2,500 to $3,350 per parked-car accident. In 2015, insurance companies spent over $145 million in total costs due to physical damages and liabilities. In addition, owners of damaged vehicles in parked-car accidents often pay their full deductible amounts (e.g., $500-1000), increased insurance premiums, and incur the hassle of repairing the damages. Accordingly, the problem of parked-car accidents and the damages, costs, and inconvenience associated with parked-car accidents is widespread.

Furthermore, ways to document unattended parking collisions to protect vehicle owners are limited. In a parked-car accident where the owner of a vehicle is not present, the owner is likely to pay higher insurance premiums post-accident, even if the owner was not at fault. There is also an immediate depreciation of the value of a vehicle to the vehicle being linked to a reported accident. The relationship between insurance companies and their customers may also become embattled due to high deductible premiums and whether certain parked-car accident claims will be paid out. Frustrated customers may also switch insurance providers, leading to more costs borne by both the customer and the insurance companies (e.g., switching costs, costs of acquiring a new customer to replace lost business, costs of additional customer service to try to retain customer, etc.).

Vehicle owners currently have limited or no options to capture information related to a parked-car collision, and therefore often do not have evidence to hold the drivers who are at fault responsible for damages to an unattended parked vehicle. In other words, vehicle owners do not have a seamless way to gather accident information and submit insurance claims in an improved and/or automatic way. Accordingly, the embodiments described herein help prevent collisions with the visual and auditory based alert attempts to prevent accidents, prevent collisions by holding drivers accountable for hit-and-runs by making drivers more accountable and careful, protect car owners by providing collision reports and causing costs of an accident to be incurred by the party at fault (also protecting the parked car's owner from higher insurance premiums and deductibles), and/or assist in reporting for vehicle owners (e.g., vehicle owners are empowered to decide how to respond to a reported accident by generating a police report and/or initiating/filing an insurance claim.

Advantageously, various embodiments described herein provide for a scalable platform for solving these problems that can be put into widespread use. Furthermore, various embodiments described herein capture large amounts of data that may be mined to provide other benefits as described herein. The various embodiments described herein also advantageously provide for solutions that are not visually or physically invasive for a vehicle. In this way, the vehicle is not tampered with so a vehicle owner will not void a warranty, damage their vehicle, affect the vehicle's resale value, etc. Furthermore, embodiments described herein, such as the license plate frame, do not dramatically affect aesthetics of a vehicle, which is desirable for vehicle owners/users. The hardware of the various devices described herein may also be updated with new software over time, for example by receiving software updates via a wireless transmission from a cloud server. Such software updates can cause the hardware devices to learn new functions without changing or adding to the components of the various hardware devices stored herein.

Further advantages of the various embodiments described herein include allowing insurance companies to better protect a customer's vehicle when it is parked and unattended, because the insurance company can seek payment from a driver at fault for a collision in a hit-and-run. In various embodiments, customers may also be alerted when their vehicle is being towed, add other aftermarket technologies to their vehicles, locate available parking spots, and other advantages, which will be described at greater length herein.

Other objects, features, and advantages of the various embodiments will become apparent in the present detailed description. It should be understood, however, that the detailed description and the specific examples, while indicating specific embodiments of the invention, are given by way of illustration only, and various changes and modifications that are apparent to those skilled in the art are within the spirit and scope of the various embodiments described herein. In other words, it is expected that the various embodiments described herein may be embodied in varying specific forms without departing from their spirit or essential characteristics. The described embodiments are to be considered in all respects only as illustrative and not restrictive. All changes that come within the meaning and range of equivalency of the embodiments herein are to be embraced within their scope.

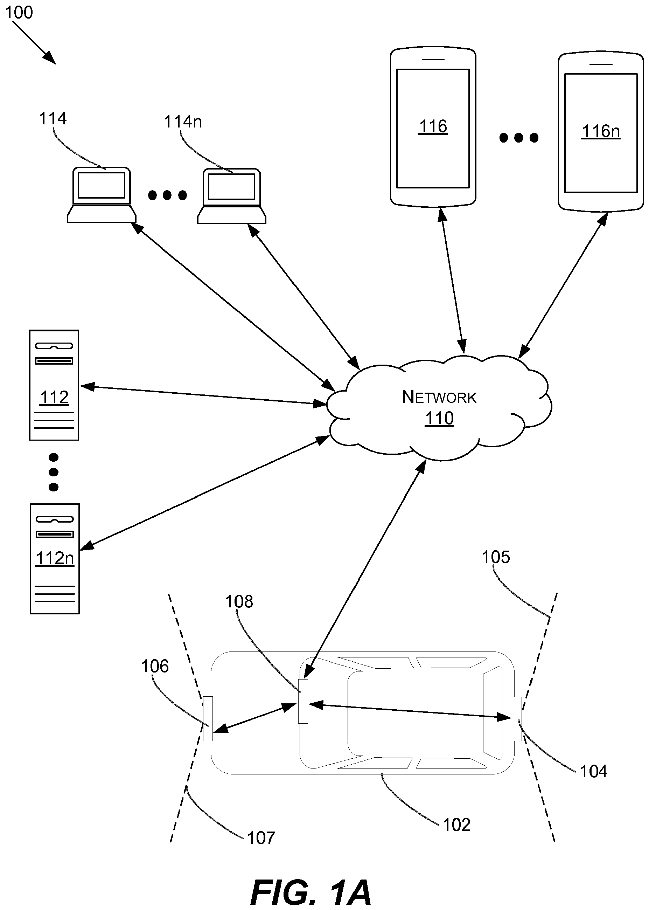

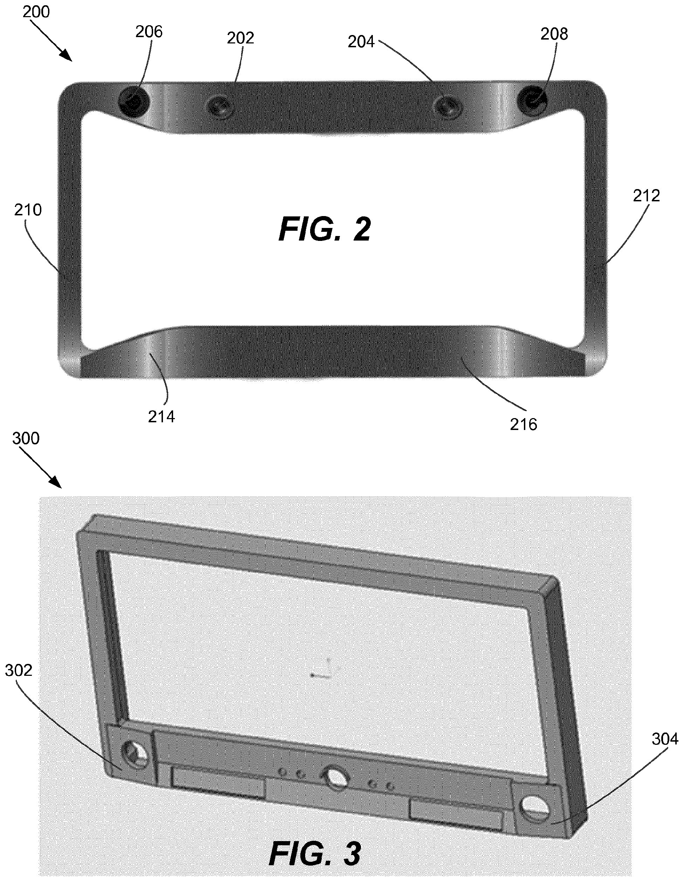

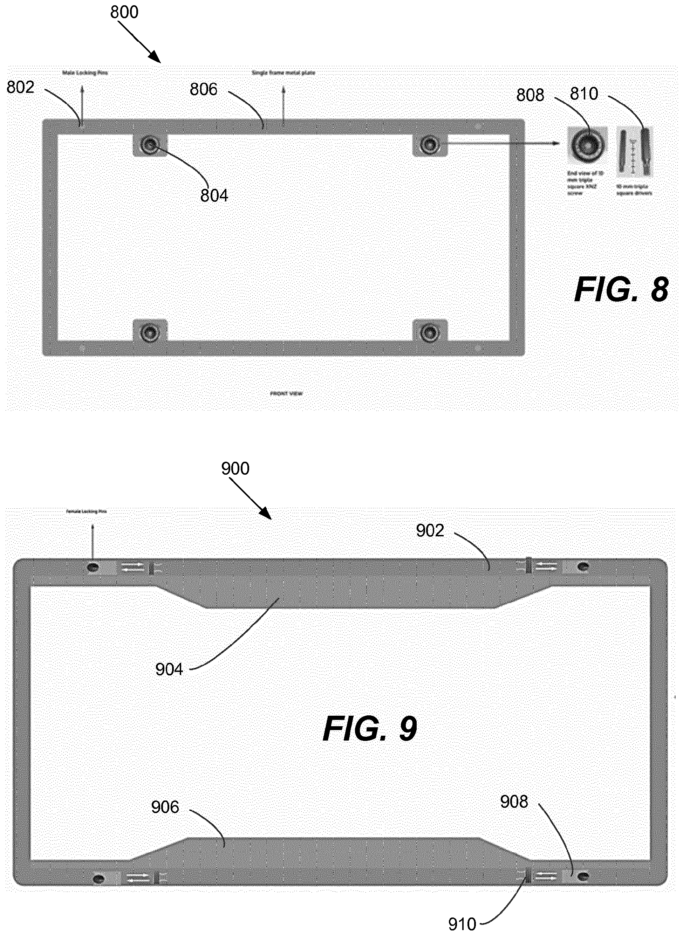

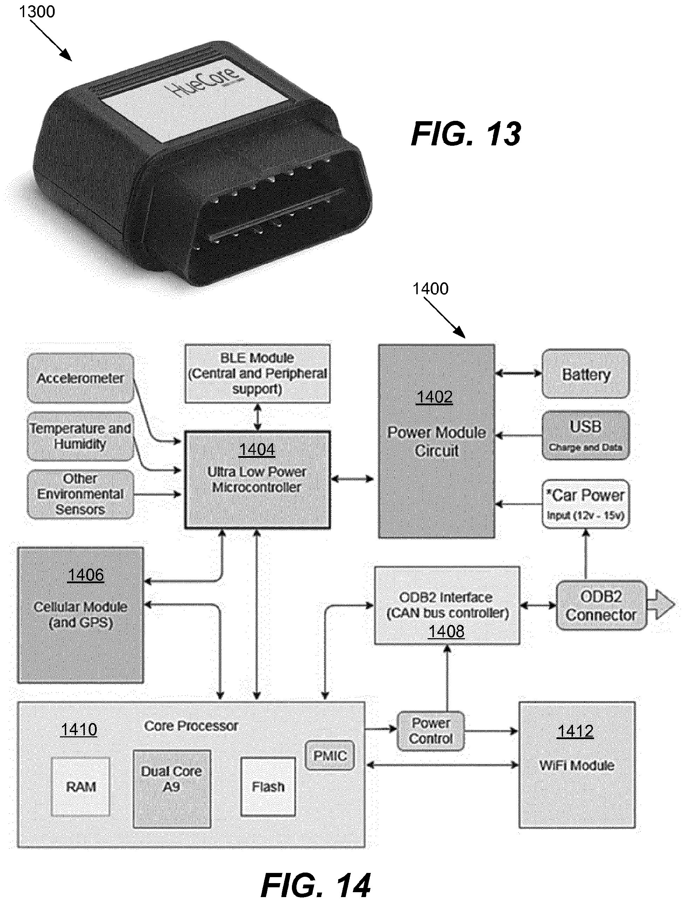

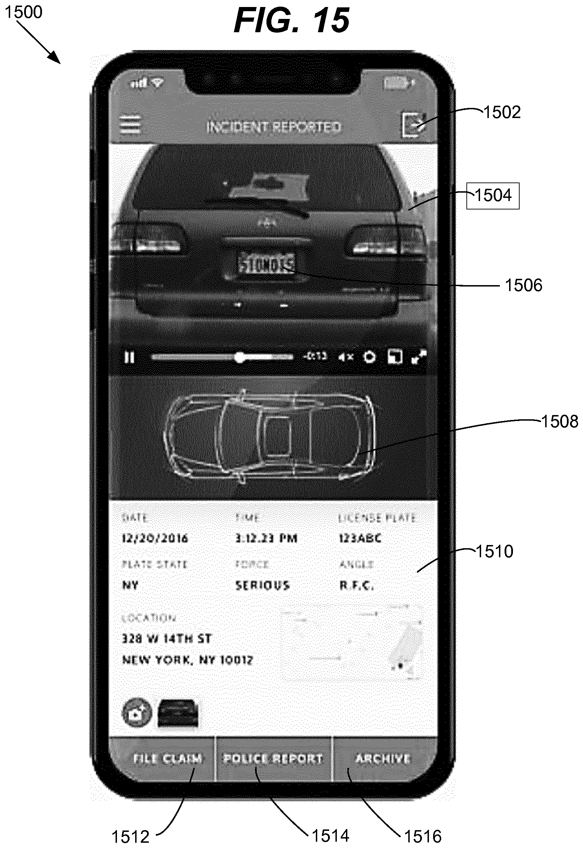

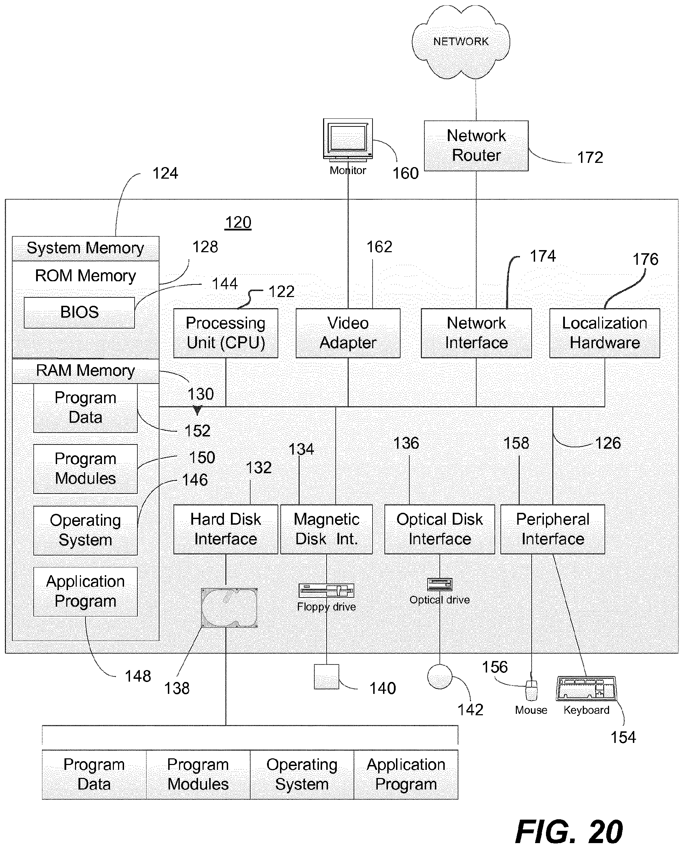

First, with respect to FIGS. 1A to 1C, an example license plate frame electronic device system will be described at a high level. With respect to FIGS. 2-7, various embodiments for a license plate frame and using a license plate frame will be described. With respect to FIGS. 8-12, various embodiments of a license plate frame locking system will be described. With respect to FIGS. 13 and 14, an example of a hub electronic device will be described. With respect to FIGS. 15-19, various embodiments of user interfaces and methods for displaying and using user interfaces on various client devices will be described. Finally, with respect to FIG. 20, an illustrative computing environment that may be used in conjunction with the methods and processes of this disclosure will be described.

FIG. 1A is a schematic diagram of an example system 100 for integrating vehicle alarms, cameras, and mobile devices, in embodiments. The system 100 includes a vehicle 102. The vehicle 102 includes a license plate frame electronic device 104 on the rear of the vehicle 102 and a license plate frame electronic device 106 on the front of the vehicle 102. The license plate frame electronic device 104 has a field of view 105 and the license plate frame electronic device 106 has a field of view 107. The field of views 105 and 107 represent an area in which cameras, motion detecting devices, proximity sensors (e.g., ultrasound sensors), etc. can see and/or sense. In various embodiments, the field of views 105 and 107 may be shaped differently depending on the orientation of the license plate frame electronic devices 104 and 106, the type and/or calibration of components used, or other factors. In various embodiments, the vehicle may have installed as an aftermarket product and/or integrated into the vehicle, additional electronic devices that include some or all of the same components as and may perform some or all of the same functions as the license plate frame electronic devices 104 and 106.

The license plate frame electronic devices 104 and 106 can electronically communicate with a hub electronic device 108. For example, the license plate frame electronic devices 104 and 106 may communicate with the hub electronic device 108 through a wireless communication protocol, such as Wi-Fi, Bluetooth, Bluetooth Low Energy (BLE), another type of wireless communication, or any combination thereof. In some embodiments, the license plate frame electronic devices 104 and 106 may communicate with the hub electronic device 108 through a wired connection (e.g., through the vehicle 102). The hub electronic device 108 communicates with other devices through a network 110. In various embodiments, the license plate frame electronic devices 104 and 106 may also communicate with other devices through the network 110. In various embodiments, the other devices in FIG. 1A may communicate with the license plate frame electronic devices 104 and 106 and the hub electronic device 108 directly instead of through a network.

The hub electronic device 108 may be an aftermarket device installed on the vehicle 102, or the hub electronic device 108 may be integrated into the vehicle 102. The hub electronic device 108 may be electronically connected to an on-board diagnostic (OBD) port, such as an OBD-II port. In this way, the hub electronic device 108 may communicate with computing systems, sensors, etc. of the vehicle 102. The hub electronic device 108 may also be powered through the connection to an OBD port. In various embodiments the hub electronic device 108 may be battery powered and/or may not be attached to the OBD port of the vehicle 102.

As described herein, the license plate frame electronic devices 104 and 106 and the hub electronic device 108 in accordance with various embodiments. For example, the license plate frame electronic devices 104 and 106 may be used to sense whether a vehicle or other object is (1) in front of or behind the vehicle 102, (2) in motion, (3) in danger of colliding with the vehicle 102, (4) going to inevitably collide with the vehicle 102, or any combination thereof. The license plate frame electronic devices 104 and 106 may also be utilized to capture one or more images (e.g., video) of something within their respective field of view. As described herein, this provides for the license plate frame electronic devices 104 and 106 to capture images and/or video of a vehicle who may collide with the vehicle 102.

Accordingly, the license plate frame electronic devices 104 and 106 may be a smart license plate frame. In this way, a number of sensors and cameras may exist on the vehicle 102 all by placing one or two of the license plate frame electronic devices onto the vehicle 102. The license plate frame electronic devices 104 and 106 may alert the hub electronic device 108 of potential risky events (e.g., driver parking too close, another vehicle hitting the vehicle 102 potentially causing damages). The hub electronic device 108 may send images, video, data from various sensors, etc. captured and/or measured by the license plate frame electronic devices 104 and 106 along to other devices as a result of conditions detected at the license plate frame electronic devices 104 and 106. Although the license plate frame electronic devices 104 and 106 and the hub electronic device 108 are shown as separate devices in FIG. 1A, the devices may be combined, partially combined, or represented by additional devices in various embodiments. Advantageously, the license plate frame electronic devices 104 and 106 are designed to accept software and firmware updates to introduce new features by teaching the existing hardware (e.g., instruct the cameras, sensors, etc., to watch for and sense different things, different combinations of things, trigger alerts for different conditions, etc.).

The hub electronic device 108 may engage in two-way interaction between any/all computers on the vehicle 102. The hub electronic device 108 may also be compatible with, or may be updated to be compatible with, other software and/or hardware products than those shown in FIG. 1A. The hub electronic device 108 may effectively create and/or administrate a secured network around the vehicle where all other hardware products (e.g., license plate frame electronic devices 104 and 106) join to extend the capabilities of the hub electronic device 108 through the introduction of additional hardware powered by evolving software development. For example, additional cameras and/or sensors may be present or added on the side of the vehicle 102, on the dashboard of the vehicle 102, the rearview mirrors of the vehicle 102, a window and/or windshield of the vehicle, etc. Integrating additional devices, sensors, etc. along with communicating with other vehicle devices through an OBD port adds to the total data collected by the hub electronic device 108, which may give a clearer picture of what a vehicle is doing and/or what is being done to a vehicle.

Other devices in FIG. 1A include mobile client electronic devices 116 to 116n, client electronic devices 114 to 114n, and servers 112 to 112n. Accordingly, the devices on and/or in the vehicle 102 (e.g., the devices associated with the vehicle 102) may communicate with various client electronic devices and servers. For example, as described herein, information about a collision may be sent to a mobile client electronic device 116. The mobile client electronic device 116 may be associated with the vehicle 102. The user of a mobile client electronic device, herein referred to as a client, may then review information captured, sensed, or otherwise assembled by the devices on or in the vehicle 102 about the collision or other circumstance. The mobile client electronic device 116 may also display information from other sources, such as the mobile client electronic devices 116n, the client electronic devices 114 to 114n, and/or the servers 112 to 112n.

Various information presented on the mobile client electronic device 116 may be presented on a display of the mobile client electronic device 116 using a software application (e.g., a mobile application). The client may also interact with the information (e.g., initiate an insurance claim, share the information, etc.) presented on the display. Such a mobile application may be used as a point of interaction between a client and any device installed on or in the vehicle 102, including any devices integrally installed in the vehicle 102. The mobile client electronic device 116 may also, using a mobile application, receive and display detailed accident reports as they are generated by the license plate frame electronic devices 104, 106 and/or the hub electronic device 108. Users can therefore interact with the data, decide how to act on said data (e.g., by filing insurance claims, by generating a police report, etc.). Information may also be collected based on a client's use of the mobile application (as well as information collected by the devices of the vehicle 102). All of this information may be stored and associated with clients. This data may be very valuable and provided to various entities, such as insurance providers, car dealerships, car repair and/or service businesses, etc.

In various embodiments, the license plate frame electronic devices 104, 106 and/or the hub electronic device 108 may be activated at different times. For example, the license plate frame electronic devices 104, 106 and/or the hub electronic device 108 may be (1) always on; (2) automatically activated when the engine is off; (3) automatically activated when the vehicle is stationary for a predetermined amount of time (e.g., a default time, a user specified amount of time); (4) automatically activated when a mobile client electronic device associated with the vehicle is a predetermined threshold distance from the vehicle 102; (5) manually activated by a client through a user interface of a client electronic device; (6) automatically activated when the vehicle is in motion; or any combination thereof.

In various embodiments, the various devices in FIG. 1A may include redundancies to better store, manage, and protect data. For example, memory of one, some, or all of the license plate frame electronic devices 104, 106 and the hub electronic device 108 may store a copy of an accident report and video/images related to an accident. In various embodiments, that information may be stored for a certain amount of time, for example 24 hours, 48 hours, or some other amount of time. A copy of the information may also be sent to another device, such as one of the servers 112 to 112n. In various embodiments, the information may also be stored on a network of storage devices accessible through the internet (e.g., a cloud service server). Files on the servers 112 to 112n and/or a cloud server may also be deleted after a predetermined threshold of time (e.g., 14 days). A client may be permitted to indicate through a user interface of a client electronic device (e.g., the mobile client electronic device 116) that the information should not be deleted. This interaction exempts the information from being deleted according to the predetermined threshold time rule. This indication from the client may be made through a graphical user interface (GUI) displayed on the mobile client electronic device 116, such as a touchscreen.

In various embodiments, the devices in FIG. 1A may communicate through varying communication protocols. For example, the license plate frame electronic devices 104, 106 may communicate with the hub electronic device 108 through Wi-Fi, Bluetooth, BLE or another communication protocol that is implemented over a small area. The hub electronic device 108 may communicate with the other devices through a larger network, such as the internet, a cellular data network, satellite communications, etc.

In various embodiments, client electronic devices may communicate with devices in or on the vehicle 102 directly. For example, the mobile client electronic device 116 may be capable of Wi-Fi, Bluetooth, and/or BLE communications. In an embodiment, the vehicle may be in a geographic area that is beyond the range of a cellular network or other network. Therefore, the hub electronic device 108, for example, can communicate directly with the mobile client electronic device 116 to communicate information about an accident/collision (or some other type of information). If the mobile client electronic device 116 is not in range of the vehicle 102 devices, the mobile client electronic device 116 may periodically connect with devices (e.g., the server 112, a cloud server, etc.) to deliver the alert/report/data when coverage is restored and the vehicle 102 devices can communicate again across the network 110.

As described further herein, this accident alert/report/data may be used to help generate/initiate an insurance claim or police report. In addition, data from a large number of clients may be utilized for insurance data and analytics purposes, such as determining high risk parking zones or the customers driving behavior profile. In some embodiments, one of the devices in or on the vehicle 102 includes a GPS tracking system, which enables recovery of a stolen vehicle. In a some embodiments, the information concerning a stolen vehicle may be forwarded to the police.

FIG. 1A is merely one example of devices that may be used as described herein. In various embodiments, more or less devices may be used, and some devices, aspects of devices, and/or components of devices may be combined with one another, duplicated, or otherwise varied.

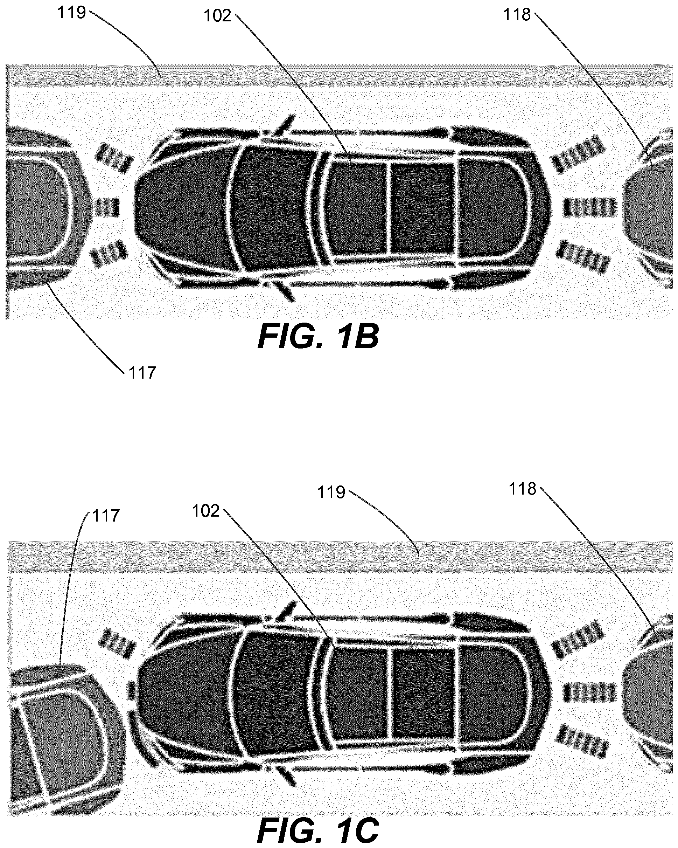

FIGS. 1B and 1C are schematic diagrams of examples of detecting proximity of vehicles in front of and behind a vehicle, in embodiments. FIGS. 1B and 1C show the vehicle 102 in between a vehicle 117 and a vehicle 118. The vehicles 102, 117, 118 are shown parallel parked next to a curb 119 in FIG. 1B. Indications of how much space between the vehicle 102 and 117 as well as the vehicle 102 and 118 are shown. In FIG. 1B, the vehicle 102 is a sufficient distance from both of the vehicles 117 and 118, although the vehicle 102 is closer to the vehicle 117 than the vehicle 118.

In some embodiments, the vehicles 102, 117, 118 may not be parked, but may be driving on a road, stopped on a road (e.g., at a red light, for a pedestrian, etc.), or otherwise. In FIG. 1C, the vehicle 117 has moved from its position in FIG. 1B, either pulling out of a parking spot or into a parking spot. In various embodiments, the license plate frame electronic devices 104, 106 and/or the hub electronic device 108 of FIG. 1A combine with a vehicle's alarm system to use its horn and lights to generate proximity based alerts designed to keep parking drivers at a safe distance such as the driver of the vehicle 117. Various actions and predetermined distance thresholds may be used to warn a driver they are getting too close to another vehicle. For example, at 30 inches before the collision, the vehicle's 102 horn honks twice along with two high-beam flashes. At 15 inches before the collision, the vehicle's horn honks three times along with three high-beam flashes. At this range, the license plate frame electronic device 106 also begins video recording in preparation for a potential accident. Upon an impact/collision, a notification may be transmitted to a client electronic device associated with the vehicle with a detailed accident report. This data may be displayed on the mobile client electronic device 116, for example. The data may include, for example, a date and time of the accident, a video of the accident, an impact force of the accident, an angle of the accident, a location on the vehicle where the vehicle was hit, an angle of the accident, a global positioning service (GPS) location of the accident (or other type of location information), a license plate number of the offending vehicle, license plate state of the offending vehicle, or any combination thereof.

The client, using the client electronic device, may then forward the data/information about the accident/collision to his or her insurance agency to initiate an insurance claim. This data may be combined with other data when it is sent to an insurance provider device. The other data may include the offending vehicle's registration information (looked up based on the offending vehicle's license plate number and state), a location of a mobile client electronic device at the time of the accident, a location of the client's vehicle at the time of the accident, a client's vehicle insurance policy number, a client's vehicle's speed at the time of the accident. In this way, an insurance company may make a determination of the merits of the insurance claim based on the information/data. For example, a client may better prove that an accident was an unattended hit-and-run by submitting the information indicating that the client's mobile electronic device was in a different location from the client's vehicle at the time of the accident/collision. A video and/or images of the accident/collision may also support this conclusion.

FIG. 2 is an example of a license plate frame 200 with various electronic components, in accordance with embodiments. The license plate frame 200 includes wide angle cameras 202 and 204. In some embodiments, one of the wide angle cameras 202 and 204 may be a night vision camera and the other may be a day/standard camera. The license plate frame 200 also includes proximity sensors 206 and 208 that can detect how far away an object is. The license plate frame 200 also includes (not shown because it is inside or on the back side) a Wi-Fi antenna 210. In various embodiments, the license plate frame 200 may include other types of antennae instead of or in addition to the Wi-Fi antenna 210. For example, the license plate frame 200 may also include (not shown because it is inside or on the back side) a Bluetooth antenna 212.

The license plate frame 200 may also include (not shown because it is inside or on the back side) an on-board battery 214. In various embodiments, the electronic components of the license plate frame 200 are powered by the battery 214. In some embodiments, the electronic components may be powered by a hardwired connection to the vehicle battery or power source, or may be powered by a combination of a hardwired connection and the battery 214. The license plate frame 200 also includes (built into the front side of the license plate frame 200) a solar charger 216. The solar charger 216 may power electronic components of the license plate frame 200 and/or charge the battery 215.

The license plate frame electronic devices 104, 106 may be or may be similar to the license plate frame 200 of FIG. 2. The license plate frame 200 may be secured to the vehicle 102 and forms a frame around a license plate. The license plate frame 200 blends in discreetly with the vehicle's license plate, instead of affecting the aesthetics of the car. The license plate frame 200 also prevents the constant mounting and dismounting done with conventional license plate frames to avoid paint damage.

Accordingly, as described herein, license plate frames like the license plate frame 200 may help prevent a collision. When that is not possible, the reports generated based on at least some information captured/sensed by the license plate frame 200 may clear drivers from being financially responsible and/or get them reimbursed for their premium payment. Installation of the license plate frame 200 is also easy and inexpensive. Installation and locking aspects of the various license plate frames described herein are described below with respect to FIGS. 8-12. The installation may be 100% wireless and may be installed without professional help, bypassing invasive installation procedures. The license plate frame 200 may, in various embodiments, include other components and/or sensors, such as one or more three-dimensional (3D) impact sensors, on-board memory, anti-theft protection components, high definition (HD) proximity sensors, or more. The components/sensors may be housed within a protective enclosure (e.g., an ABS™ enclosure), which forms the license plate frame.

The smart frames, including the license plate frame 200, may be linked to a client and/or client electronic device. In this way, if a license plate frame is missing or stolen, it can be deactivated/disconnected from the previously linked account/owner. In this way, even if a license plate frame was stolen, they may be rendered useless to deter theft attempts and further offer peace of mind to a vehicle owner.

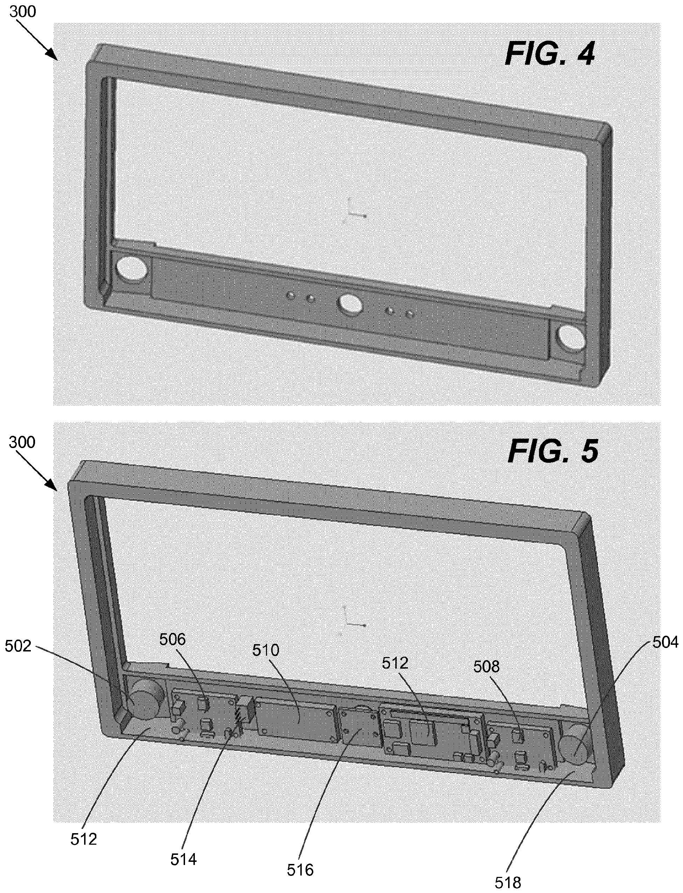

Other features of a license plate frame such as the license plate frame 200 may include a non-obscuring frame design, where the frame does not obscure a state name at the top or bottom of a license plate, a date of registration in a corner of the license plate (e.g., a sticker). The frames may also have a universal fit feature to accept all different license plates that might vary slightly in thickness, outside/edge dimensions, or both (see FIG. 4, where the frame can fit somewhat varying sized license plates similar to a picture frame). The frames may also include an angular fit feature to adjust the orientation of a license plate therein. For example, the frame may be designed such that the license plate is parallel to the front face of a frame, or the inside that holds the license plate may be configured such that the license plate is oriented at an angle (e.g., a 5 degree angle, a 10 degree angle, etc.) resulting in the overall orientation of the license plate being angular with respect to the front frame. In other words, when someone looks at the side of a frame with an angular license plate configuration, the person will see a rectangular design and not a trapezoidal design. However, the license plate will still be is slightly angled or inclined.

The license plate frames described herein may also replace other types of conventional license plate frames. A surface with the solar panels may also be tilted or angled upward (toward the sky) so as to catch more sunlight. In some embodiments, a video camera may be located at the top of the license plate frame in the center of the top portion. In some embodiments two infrared sensors may be utilized at the top of the license plate frame, and may be placed on either side of a centrally located camera.

FIG. 3 is an example of a front view of a license plate frame 300 without electronic components, in embodiments. The license plate frame 300 includes a space for a license plate to be viewable, and spaces for electronic components. Surfaces 302 and 304 are tilted slightly sideways for two sensors on the bottom. These sensors may be, for example, a proximity sensor such as an ultrasound sensor, time-of-flight (TOF) sensor, or some other kind of motion detection sensor, proximity sensor, camera, etc. Because the two surfaces 302 and 304 (and the sockets for sensors associated with the surfaces 302 and 304) are tilted away from the center of the license plate frame 300, the sensors together may have a wider field of view than if the two sensors were oriented in the same direction. In various embodiments, some sensors may be oriented in other ways to increase or decrease a field of view as desired.

FIG. 4 is an example of a rear view of the license plate frame 300 of FIG. 3, in embodiments. As seen in FIG. 4, the license plate frame has additional undercut space to house electronic components. FIG. 5 is an example of a rear view of the license plate frame 300 of FIGS. 4 and 5 with electronic components, in embodiments. Although FIG. 5 shows the license plate frame 300 with an open back, the license plate frame 300 where the electronic components are may be enclosed, so that people may not have access (or will have limited access) to the electronic components. This may also protect the electronic components from tampering and/or environmental contamination.

The license plate frame 300 as shown in FIG. 5 includes ultrasound sensors 502 and 504, ultrasound drivers 506 and 508, two spaces for accelerometers 512 and 518 (not shown), a power regulator 514, a main central processing unit (CPU) and BLE radio 510, a camera 516, and a video controller board and Wi-Fi radio 512. Other license plate frames in various embodiments may have other, additional, and/or fewer components. In various embodiments, a front license plate frame for the front of a vehicle and the back license plate frame for the back of a vehicle may have different components or by configured differently.

In the license plate frame 300, the video controller board is the largest component, so it determines the height of the lower portion of the license plate frame. As described above with respect to FIG. 3, the ultrasound sensors 502 and 504 are oriented away from center to achieve a greater/wider field of view. The camera 510 is in the center with a ribbon cable (not shown) coming from the bottom of the camera 510 to save space on top where the license plate is. A position and/or orientation of the camera 516 can be adjusted and/or configured based on the shape and location of an opening in the frame for the camera 516 (similar to the openings for the ultrasound sensors 502 and 504). The electronic components, with the exception in this example of the video board, may be moved up or down within the housing of the lower part of the license plate frame 300 to accommodate any wiring that interconnects that various electronic components. In the example of FIG. 5, the various electronic components are oriented away from an undercut in the frame 300 to allow space for wiring and/or mounting features of various components. Further in FIG. 5, mounting bosses may be used as features to mount the various electronic components.

The accelerometers may be mounted on top of the main CPU board at two (2) different points. The mounting may be done in a cantilever way of attachment to allow for an accelerometer to go up and down at vibration of the car (e.g., potholes, surface unevenness while car in motion, etc.). The accelerometers may be attached by standoffs to the main CPU board.

The SmartFrame also includes a three-dimensional (3D) motion sensor and/or gyroscope that detects impact, impact force, and/or impact angle of a collision. The impact force may be calculated, for example, in pound-feet of pressure. The impact force may be converted to common language representation based on its magnitude. For example, the impact force may be represented to a client on a client electronic device as a "Light Accident," "Medium Accident," or "Serious Accident."

The license plate frame 300 also includes a Bluetooth radio, also referred to as a Bluetooth enabled transmitter. This allows the license plate frame 300 to transmit data collected from the various sensors to another device, such as a client electronic device or a hub electronic device. The license plate frame 300 may also be formed from a protective material such as an ABS™. Such an enclosure seals the electronic components of the license plate frame 300 from water and dust, and allows it to withstand reasonable impacts.

Table 1 below presents an illustrative example of components for a license plate frame according to the embodiments described herein, including a quantity used and manufacturer/ supplier. It will be understood by one of skill in the art that this is an illustrative example, and that these components may be removed, replaced with other components, or supplemented by additional components to practice methods described with respect to the various embodiments herein.

| **Table 1: Example Components of License Plate Frame Electronic Device** | | | |
|---|---|---|---|
| **Component** | **Description** | **Qty** | **Manufacturer/Supplier** |
| BCM2835 | System on Chip Processor | 1 | Besen Chips |
| | Ultra low power u-processor | 1 | Besen Chips |
| 512MB LPDDR2 | Memory RAM | 1 | Micron |
| CYW43438 | Wifi/ BLE 4.1 single chip | 1 | Cypress |
| IMX219 | HD daylight camera | 1 | Sony |
| | 170 degree lens | 2 | Sony |
| IMX219 Noir | HD IR sensitive camera | 1 | Sony |
| ADXL335 | Impact measurement sensor (Accelerometer IC ADXL335BCPZ ADXL335) | 1 | Chaoyue Electronics Co., Ltd |
| | distance sensor | 2 | Chaoyue Electronics Co., Ltd |
| 200mm*35mm, 5v 1.1w | 22mA custom-made solar cell panel | 1 | Shine Solar Co., Ltd |
| | solar charge controller | 1 | Shine Solar Co., Ltd |
| TPS65217 | PWM step down 3 DC to DC converter | 1 | SZ Goldensun Electronics Co., Ltd |
| 18650 2400mAh 3.7v | NCR 18650B lithium battery | 3 | Panaso |
| | 8GB SD Memory | 1-4 | Micron |
| License plate frame | ABS Enclosure | 1 | Hammond Mfg. |

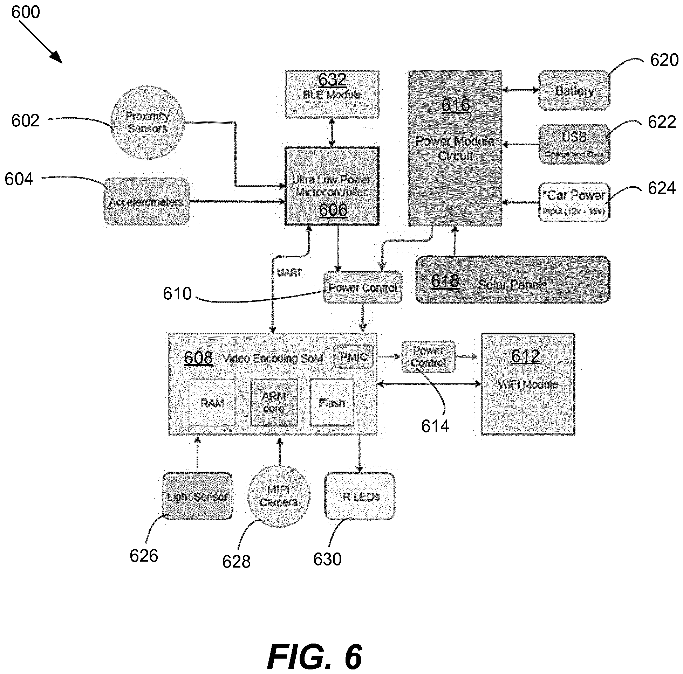

FIG. 6 is a functional block diagram illustrating an example license plate frame electronic device 600, in embodiments. The license plate frame electronic device 600 includes proximity sensors 602 and accelerometers 604 connected to an ultra low power microcontroller 606. The ultra low power microcontroller 606 is also connected to a BLE module 632 that may, for example, communicate with a hub electronic device. The ultra low power microcontroller is also connected to a power control 610 and a video encoding system on module (SoM), which includes a power management integrated circuit (PMIC), random access memory (RAM), flash memory, and an advanced reduced instruction set computing (RISC) machine (ARM) core. The video endoding SoM is connected to a light sensor 626, a mobile industry processor interface (MIPI) camera 628, infrared (IR) light emitting diodes (LEDs) 630, the power control 610, a power control 614, and a Wi-Fi module 612. The power control 610 is further connected to a power module circuit 616, which is connected to a battery 620, a universal serial bus (USB) port 622 for charging and data, a car power input 624 of twelve (12) to fifteen (15) volts, and solar panels 618.

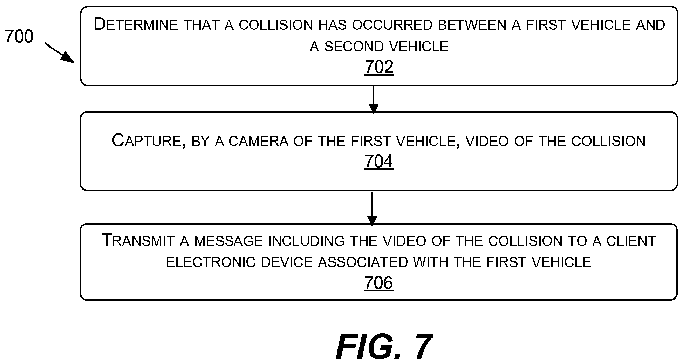

FIG. 7 is a flow chart illustrating an example method 700 of capturing video of a collision and transmitting video of the collision, in embodiments. At an operation 702, an electronic device (e.g., a license plate frame, a hub electronic device, a combination of the two) determines that a collision has occurred between a first vehicle and a second vehicle. The determination that a collision has occurred may be based on, for example an impact sensor sensing an impact force as described herein. The collision may also be determined based on measurements from a proximity sensor indicating that a distance between the first and second vehicles is below a threshold value indicating that a collision is likely and/or certain.

In various embodiments, the electronic device(s) may determine that a collision is likely and/or certain prior to the collision actually occurring. For example, the distance between the first vehicle and the second vehicle may be monitored over time. Such monitoring may be possible based on, for example, measurements using proximity sensors. Although various embodiments include using different types of proximity sensors, other types of sensors and/or cameras may be utilized to determine the distance between the first and second vehicles as is known in the art.

Accordingly, the determination that the collision is going to or is likely to occur may be made by determining that the distance between the first and second vehicle is below a first predetermined threshold at a first time before the collision. For example, if the distance between the first and second vehicles is less than ten (10) feet, six (6) feet, three (3) feet, thirty (30) inches, fifteen (15) inches, one (1) foot, six (6) inches, three (3) inches, or any other threshold value, the electronic device may determine that a collision is likely to or is going to occur.

In various embodiments, other and/or additional methods may be used to determine that a collision is going to or is likely to occur. For example, the electronic device may determine that the distance between the first and the second vehicles is decreasing at a rate greater than a predetermined threshold at the first time before the collision. In other words, this measure takes into account how fast the first and the second vehicle are moving relative to one another toward each other. If the vehicles are moving quickly enough toward one another, the electronic device may determine that a collision is going to or is likely to occur.

In some embodiments, the electronic device may take into account a rate at which the vehicles are moving toward each other and the actual distance between the vehicles when determining whether a collision is likely to or going to happen. If two vehicles are moving at very different speeds on a roadway, but the second vehicle is two (2) miles behind the first vehicle, it is unlikely that there will be a collision no matter how quickly the two vehicles are moving toward one another. Accordingly, the electronic device may take into account both the absolute distance between the vehicles and the rate at which the distance between the two vehicles is getting smaller to determine whether a collision is likely to or going to happen. In other words, the electronic device may determine, based on a determination at the first time that the distance is below a first predetermined threshold and that the distance is decreasing at a rate greater than a second predetermined threshold, that the collision will occur or is likely to occur at some second time after the first time.

At an operation 704, a camera associated with the first vehicle captures video of the collision including at least one image of the second vehicle. In some embodiments, the camera may capture still images instead of or in addition to video. The camera may also capture images before and/or after the collision. As described above with respect to the operation 702, the electronic device may determine in different ways and at different times that a collision is going to occur, is likely to occur, and/or has occurred. In various embodiments, the camera may begin capturing images and/or video once the determination is made that a collision is going to occur, is likely to occur, and/or has occurred. Accordingly, an image and/or video including the second vehicle may be captured in response to determining that the collision will occur and captured at least in part before the collision occurs.

In an operation 706, the electronic device transmits a message to a client electronic device associated with the first vehicle in response to determining that the collision has occurred. The message includes the at least one image and/or video of the second vehicle. If the message includes an image of the second vehicle, the image may be from before or after the collision. In various embodiments, an image transmitted to the client electronic device may be an image determined to be showing a license plate of the second vehicle. In various embodiments, the message may also be transmitted to other devices such as a server and/or client electronic device associated with an insurance company, a dealer/maintenance/service company, a manufacturer of vehicles, etc.

In various embodiments, the first vehicle may be parked when the collision occurs. In addition, the first vehicle may be switched off when the collision occurs. For a vehicle with a gasoline engine, that may mean the engine is not running. For a vehicle with one or more electric motors, that may mean the electric motor(s) of the vehicle is in a state where it cannot be engaged without switching on the vehicle fist. In some embodiments, the first vehicle may be in use when the collision occurs.

The message transmitted to the client electronic device in response to determining that the collision has occurred may include other information as well. For example, the electronic device(s) on or in the first vehicle (e.g., the license plate frame) may determine which portion of the first vehicle the second vehicle collided with. The determined location of the first car where the collision happened may be a front end, rear end, right-front end, left-front end, right-rear end, left-rear end, left side, front-left side, rear-left side, right side, front-right side, rear-right side, etc. The right side may also be referred to as a passenger side and the left side may also be referred to as a driver's side of the vehicle. Therefore, the message transmitted regarding the collision can also indicate the portion of the first vehicle that the second vehicle collided with.

In various embodiments, the electronic device(s) on or in the first vehicle may determine an impact force of the collision experienced by the first vehicle during the collision as described herein. Information regarding the impact force of the collision may also be included in the transmitted message regarding the collision. In other words, the message may further include data indicating the impact force of the collision. In this way, a client will have some understanding of the severity of the collision before arriving at the scene of the accident to inspect the damage to their vehicle.

In embodiments where the electronic device includes both a license plate frame electronic device with a camera and a hub electronic device that are in wireless communication with each other, information (including the at least one image of the second vehicle) may be transmitted wirelessly from the license plate frame electronic device to the hub electronic device. The hub electronic device then transmits the message including the at least one image to the client electronic device (and such transmission may be via a network). It will be understood by one of ordinary skill in the art that a video is a series of images, and a video therefore includes at least one image. Similarly, a video that shows the second video only part of the time of the video still includes at least one image showing the second vehicle.

FIG. 8 is a schematic diagram of an example of a license plate frame base 800 with a locking mechanism for securing a license plate frame, in embodiments. FIG. 9 is a schematic diagram of an example of a license plate frame with a locking mechanism for securing to the license plate frame base of FIG. 8, in embodiments. The locking mechanisms of FIGS. 8 and 9 provide for a license plate frame that prevents an authorized party from removing the license plate frame from a vehicle. In particular, the locking mechanism may be controlled using a software application, such as a mobile application executed on a mobile client electronic device.

The license plate frame base 800 attaches to a vehicle similar to a conventional license plate and/or conventional license plate cover. The license plate frame base 800 may attach to the vehicle using hook and loop fasteners, magnets, side fasteners, screws, other fastening devices, etc. In FIG. 8, the license plate frame base 800 is provided with four screws (e.g., screw 804) for attaching the license plate frame base 800 to the vehicle. A close-up 808 of the head of one of the screws and example tools 810 for tightening/loosening the screws are shown in FIG. 8.

The license plate frame base 800 includes a metal frame 806, to which male locking pins (e.g., male locking pin 802) are attached. These male locking pins protrude away from the metal frame 806 and a vehicle when the license plate frame base 800 is properly installed on a vehicle. There is a male locking pin similar to the male locking pin 802 near each of the four corners of the metal frame 806.

The license plate frame 900 includes a metal frame 902 and wing portions 904 and 906. When the license plate frame 900 is properly installed on the vehicle and overlaying the license plate frame base 800 of FIG. 8, the wing portions 904 and 906 are in front of the screws of the license plate frame base 800. The wing portions 904 and 906 are rigid, so that access to the screws of the license plate frame base 800 is therefore blocked/restricted when the license plate frame 900 is locked to the license plate frame base 800. This prevents unauthorized removal of the license plate frame base 800 and the license plate frame 900 from the vehicle to which they are attached. Furthermore, the screws are hidden, which enhances the aesthetic appeal of the license plate frame 900 compared to conventional license plates and covers.

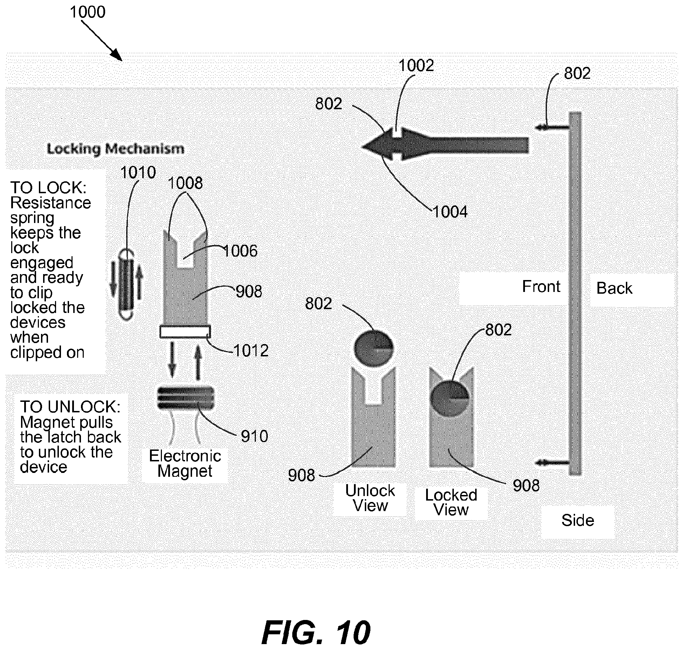

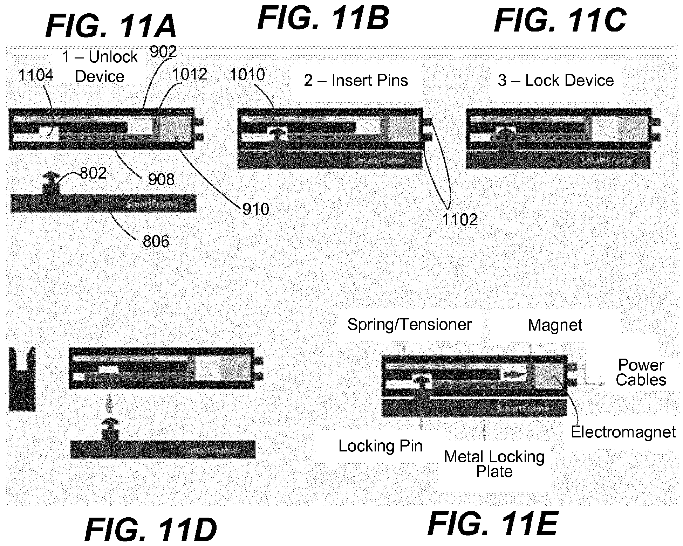

The license plate frame 900 also includes a locking mechanism that includes female locking pins (e.g., female locking pin 908) and electromagnets (e.g., electromagnet 910). As will be discussed below at greater length with respect to FIGS. 10 and 11A-11E, the male locking pins of the license plate frame base 800 can insert into an opening of the license plate frame 900. The male locking pins engage with the female locking pins of the license plate frame 900 to lock the license plate frame 900 to the license plate frame base 800. The license plate frame 900 may be released from the license plate frame base 800 by activating the electromagnets of the license plate frame 900 to move the female locking pins to disengage and release the male locking pins of the license plate frame base 800. Similar to the male locking pins of the license plate frame base 800, the openings, female locking pins, and electromagnets may generally be located near each of the four corners of the license plate frame 900. The electromagnets can be controlled by a processor of the license plate frame 900, and as described herein license plate frames may also communicate with other devices. Accordingly, the license plate frame 900 may receive a signal and/or instruction from a mobile client electronic device to unlock the license plate frame 900 (e.g., to engage the electromagnets) and release the license plate frame 900 from the license plate frame base 800.

In an example embodiment, an authorized client may log into a mobile app on their mobile client electronic device and select on an "Unlock Device X" graphical user interface element (e.g., displayed on a touchscreen of a smartphone). This action transmits a signal to the intended license plate frame which responds by sending an electrical current to the locking mechanism. The mechanisms may only stay unlocked for a predetermined amount of time (e.g., 15 seconds) before the mechanisms lock again (e.g., the electrical current is removed from the electromagnets). In this way, if the client inadvertently unlocks the license plate frame or forgets to remove the license plate frame after unlocking it, the license plate frame will not stay unlocked indefinitely, which would pose a security risk. The locking mechanisms and the license plate frame itself may be associated to one or more particular client accounts until they are disassociated from that account by the authorized clients. In this way, only authorized clients have the ability to unlock and remove the license plate cover from the vehicle.

In various embodiments, a license plate cover may be associated with a unique identifier (ID) that is linked to a particular account of a registered client. The client may manage their account and/or devices through an online profile. Even if a device such as a license plate cover is stolen, it may not be linked to another client's account unless it is disassociated from the previously linked account/client. Accordingly, a stolen license plate frame may be rendered useless, further deterring theft attempts and offering peace of mind to clients.

FIG. 10 is a schematic diagram of an example of details of the locking mechanisms 1000 of FIGS. 8 and 9, in embodiments. In particular, FIG. 10 shows a clip-on locking electromagnetic mechanism that provides for easy installation of a license plate frame. As discussed herein, to unlock the license plate frame, the client may link the license plate frame to their account/mobile app so that the locking mechanism may be controlled (e.g., unlocked from the license plate frame base 800).

In particular, FIG. 10 shows the male locking pin 802, which has a tapered end 1004 and a groove 1002. The groove 1002 of the male locking pin 802 is configured to fit in an opening 1006 of the female locking pin 908. Furthermore, the tapered end 1004 of the male locking pin 802 is configured to interact with angled edges 1008 of the female locking pin 908 such that, before being in a locked position, the male locking pin 802 can pushes the female locking pin 908 toward the electromagnet 910 until the groove 1002 rests in the opening 1006 and the female locking pin 908 snaps back into place due to a spring 1010 which biases the female locking pin 908 toward an opening for the male locking pin 802. The female locking pin 908 is also attached to a metallic base 1012, so that the electromagnet 910 may be activated to pull the female locking pin 908 toward the electromagnet 910.

FIGS. 11A-11E are schematic diagrams of examples of the functionality of the locking mechanisms of FIGS. 8-10, in embodiments. The locking process shown in FIGS. 11D and 11E is mechanical, so no electrical energy is used while locking the license plate frame 900 to the license plate frame base 800. The locking process shown in FIGS. 11A-11C and the unlocking process uses electrical energy as the electromagnet 910 is engaged at some point in both instances. The electromagnet may be engaged by applying a voltage across two leads 1102.

In FIG. 11A, the female locking pin 908 is drawn away from an opening because the electromagnet 910 is on, pulling the metallic base 1012 and the female locking pin 908 toward the right side of FIG. 11A. The spring 1010 is connected to the metallic base 1012 and typically pulls or biases the metallic base 1012 and the female locking pin 908 toward the left of FIG. 11A (e.g., toward the opening 1104). However, the magnetic force between the electromagnet 910 and the metallic base 1012 overcomes the spring 1010 force.

The female locking pin 802 is then inserted into the opening 1104 in FIG. 11B. In FIG. 11C, the electromagnet 910 is disengaged (the voltage applied to it is removed) so that the spring 1010 pulls the metallic plate 1012 and the female locking pin 908 toward the left of the FIG. 11C. In this way, the opening 1006 of the female locking pin 908 will sit around the portion of the male locking pin 802 with the groove 1002, so as to lock the license plate cover and the license plate cover base together. In order to unlock and remove the license plate cover, the voltage may be applied to the electromagnet 910, and the male locking pin 802 is released to be removed from the opening 1104. Note that in FIGS. 8 and 9, the male locking pins 802 are connected to the license plate cover base and the female locking pins 908 are located on the license plate cover. In various embodiments, this configuration may be swapped or differ in various ways.

In FIG. 11D, the female locking pin 908 is already biased toward the opening 1104 because the electromagnet 910 is not engaged. The male locking pin 802 may be inserted into the opening 1104 anyway, because the tapered end 1004 interacts with the angled edges 1008 of the female locking pin 908 to push the female locking pin 908 to the right of FIG. 11D, as illustrated in FIG. 11E. Once the male locking pin 802 is inserted far enough the, the spring 1010 pulls the female locking pin 908 back toward the left side of FIGS. 11D and 11E, such that the groove 1002 of the male locking pin 802 rests in the opening 1006 of the female locking pin 908. This effectively locks the license plate cover without use of electrical energy.

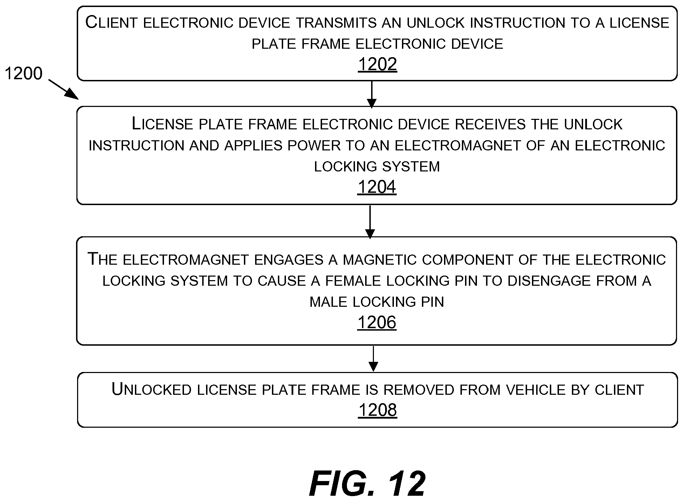

FIG. 12 is a flow chart illustrating an example method 1200 of unlocking a license plate frame, in embodiments. At an operation 1202, a client electronic device transmits an unlock instruction to a license plate frame electronic device. At an operation 1204, the license plate frame electronic device receives the unlock instruction and applies power to an electromagnet of an electronic locking system. At an operation 1206, the electromagnet engages a magnetic component of the electronic locking system to cause a female locking pin to disengage from a male locking pin. At an operation 1208, the unlocked license plate cover is then removed from the vehicle by the client.

FIG. 13 is a schematic diagram of an example of a hub electronic device capable of electronically connecting to an on-board diagnostic (OBD) port of a vehicle, in various embodiments. FIG. 14 is a functional block diagram illustrating an example hub electronic device 1400 capable of electronically connecting to an on-board diagnostic (OBD) port of a vehicle, in embodiments. The hub electronic device 1400 includes a power module circuit 1402, connected to a battery USB charge and data interface, car power input of twelve (12) to fifteen (15) volts, and an ultra low power microcontroller 1404. The ultra low power microcontroller 1404 is connected to a BLE module, an accelerometer, temperature and humidity sensors, other environmental sensors, a cellular and GPS module 1406, and a core processor 1410. The other environment sensors may include, for example, carbon dioxide (CO₂) sensors, volatile organic compound (VOC) sensors, or any other type of sensor. In this way, the hub electronic device 1400 may track and detect life threatening conditions, generate alerts and/or warning messages, transmit such alerts and/or warning messages to other devices, etc., to keep clients or other occupants of a vehicle safe. The cellular and GPS module 1406 is also connected to the core processor 1410, which includes RAM, flash memory, a dual core A9, and PMIC. The core processor 1410 is also connected to power control, a Wi-Fi module 1412, and an OBD-II (or OBD2) interface 1408. The OBD-II interface 1408 is connected to an OBD-II connector, which also supplies the car power.

The hub electronic device 1400 is configured, through at least its BLE, Wi-Fi, and cellular and GPS modules, to communicate wirelessly via a network and/or directly with other devices. The hub electronic device 1400 may also communicate through wired connections, such as the OBD-II connector and/or the USB port. The hub electronic device 1400 may, in various embodiments, act a conduit, relay, and/or processor of information received from a license plate frame, and may also prepare automotive reports (e.g., an accident report) to be transmitted over the internet and accessed via cloud services. The hub electronic device 1400 may include, as an example, a 2.3 gigahertz (GHz) microprocessor and 128GB on-board memory.

The hub electronic device 1400 may also be configured to create a Wi-Fi hot spot, providing for large transfer of data files between the license plate frames and the hub electronic device. The Wi-Fi hotspot may also be accessible via a client electronic device. The hub electronic device further provides functionality and support for a multitude of devices. These devices may include the standard diagnostic devices commonly accessible in a vehicle through OBD-II ports, back-up cameras, dashboard cameras, remove vehicle management and automation platform, dashboard camera artificial intelligence, dashboard mounted mirrors, ATO upgradable firmware, and/or any other device and/or sensor on a vehicle. After a collision, the hub electronic device may also save a copy of the accident data, including the video, into its memory. The hub electronic device may upload a copy of the data onto a server and/or an internet cloud server.

Table 2 below presents an illustrative example of components for a hub electronic device according to the embodiments described herein, including a quantity used and manufacturer/ supplier. It will be understood by one of skill in the art that this is an illustrative example, and that these components may be removed, replaced with other components, or supplemented by additional components to practice methods described with respect to the various embodiments herein.

| **Table 2: Example Components of Hub electronic device** | | | |
|---|---|---|---|
| **Component** | **Description** | **Qty** | **Manufacturer/Supplier** |
| BCM2836 | System on Chip Quadcore Processor | 1 | Besen Chips |
| CYW43438 | Wifi/ Bluetooth BLE module | 1 | Cypress |
| 1GB LPDDR2 | Memory RAM | 1 | Micron |
| ZTE ME3630 | GPS/LTE 4G GSM module | 1 | Shenzhen HWS Technology Co., Ltd. |
| MCP2551 | CAN BUS IC | 1 | Shenzhen Top Source Technology Co. |
| ADXL335 | Impact measurement sensor | 1 | Chaoyue Electronics Co., Ltd |
| DS18B20 | Temperature Sensor | 1 | Shenzhen ELE Electronic Co., Ltd. |
| | 32 GB SD Memory | 1-4 | Micron |
| OBD 16pin female connector | OBD2 Female Connector with cable | 1 | Esunway Electronic Technology Co. Ltd. |
| OBD 16pin male connector | OBD2 Male Connector | 1 | Esunway Electronic Technology Co. Ltd. |
| Structural Mold | ABS Enclosure | 1 | Hammond Mfg. |

A software application executed on a client electronic device (e.g., a mobile client electronic device such as a smartphone) may have a number of features. The app may be used by a client to manage devices and services. The app (or client electronic device) may also receive alerts and initiate the filing of insurance claims. Other functions that may be carried out using one of these software applications include generating police reports; registering/tying a device to an account; locking or unlocking devices associated with a client account; filing and/or initiating insurance claims; requesting/receiving street side parking alerts; managing alerts (e.g., when to alert a client) and other modes; and/or receiving support. Further, new features may be added via updates. Reports generated by the devices described herein may include all the information/data needed to help a client being held responsible for damages caused by other drivers, and clients may generate/initiate a detailed insurance claim directly from the mobile device application running on a mobile client electronic device. The information collected and assembled by the various devices herein may also be used to determine better risk exposure, improve underwriting processes, reduce cost and time of claims processing.

The information gathered by various electronic devices on or in the vehicle may be determined and transmitted as described in reference to Fig. 1. Information regarding a collision may include, video of the accident; date, time, and GPS location of the accident; relative impact zone and force; an image capture of the offending vehicle's license plates; a location of the vehicle as opposed to the owner and/or owner's device; or any combination thereof. The system may also utilize a third party API to look up information about an offending vehicle. The information may be looked up based on a license plate number of the offending vehicle. For example, information looked up about the offending vehicle may include a name, address, and/or contact information of a registered owner of the vehicle; vehicle details like color, make, model, year, and/or VIN number; and any other data about the vehicle, vehicle owner/user, insurer of the vehicle, owner/user's insurance policy, etc.

In various embodiments, the hub electronic device may also assist in emergency situations. For example, the hub electronic device may determine that an accident has occurred (either on its own or based on information from a license plate frame or other device), and transmit a message to emergency services to notify them of the accident.

FIG. 15 is an example user interface 1500 displaying information about a collision on a client electronic device, in embodiments. The user interface 1500 includes a share button 1502, so that information about a collision may be shared with other parties. The user interface 1500 also includes an image and/or video dialog 1504 where images and/or videos related to the collision may be displayed. The image in the user interface 1500 includes a vehicle license plate 1506.

The user interface 1500 includes a representation 1508 of the client's vehicle, and a color, symbol, or other notation may indicate where the client's vehicle was hit on the representation 1508 of the client's vehicle. The user interface 1500 includes other information 1510 about the collision, including a date, time, offending party license plate number and state, angle or location of impact on the client's vehicle, an estimated force of the collision, and a location of the collision including a map. The user interface 1500 also includes a button 1512 to initiate filing an insurance claim, a button 1514 to initiate filing a police report, and a button 1516 to archive and/or save details relating to the collision. In some embodiments, the user selecting the button 1512 may completely submit an insurance claim to an insurance company without needing any further action from the client to submit the claim. Similarly, a selection of the button 1514 by the client may submit an actual police report with the single selection, rather than merely initiating a process to submit police report.

In various embodiments, a user interface of a client electronic device may also include an input or interface for capturing images and/or video from a camera of a vehicle electronic device on demand. For example, a client may have received an accident report and wants to see what is near their car (e.g., maybe the vehicle who caused the accident still nearby). Accordingly, the client can make an input indicating a request for a camera to capture an image. The request may be routed through a network, to a hub electronic device, then to a license plate frame with a camera so that the image can be captured. Once the image is captured, it may be transmitted back to the client electronic device via the hub electronic device and the network.

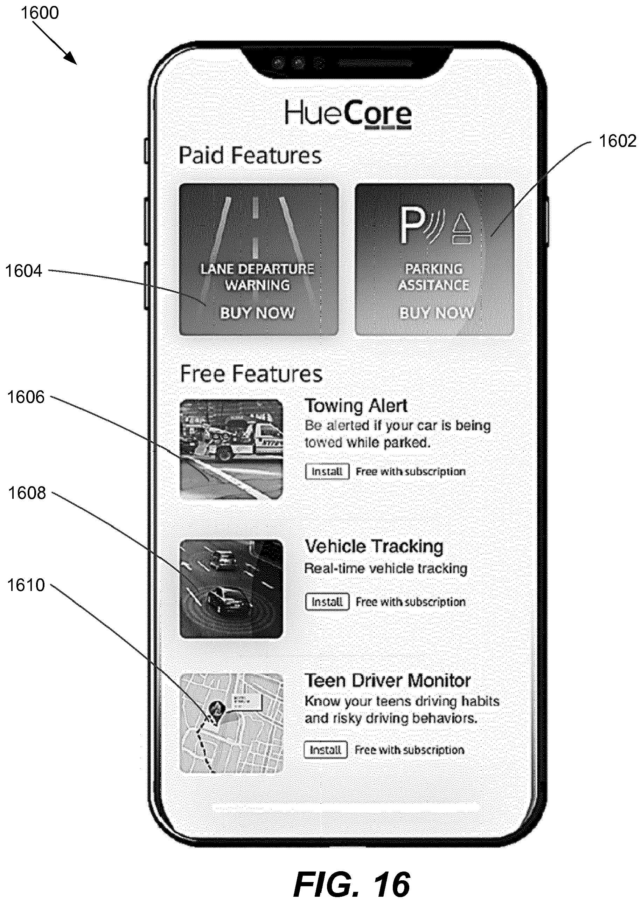

FIG. 16 is an example user interface 1600 displaying additional available features, in embodiments. Remotely installed apps distributed through an application store may provide additional features over time. For example, a lane departure warning 1604 may implement an auditory warning feature when a driver departs a traffic lane in the event they might be in a collision path with another driver. A parking assistance upgrade 1602 provides a software update to the system allowing various cameras to act as a back-up camera and assist parking.

A towing alert feature 1606 may alert the user (e.g., by sending a message to a client electronic device) when their vehicle is being towed. For example, sensors such as an accelerometer of the license plate frame may sense movement typical of a vehicle being towed (e.g., movement suggesting one end of a vehicle slowing moving up as a tow truck raises one set of wheels off the ground). In another example, an optical recognition process may recognize a tow truck and/or parts of a tow truck from images captured by a camera of the license plate frame. A vehicle tracking feature 1608 allows a vehicles location to be tracked and remotely monitored using a client electronic device. A teen driving tracking feature 1610 may log and report the driving behavior of teen drivers to their guardians, especially when risky or aggressive driving is detected. Crash detection and vehicle tracking may form part of the features incorporated for tracking teen driving.

Another additional feature may include an immobilizer feature, which prevents a vehicle from being started by an unauthorized driver and or when the vehicle is reported stolen. Another additional feature is a vehicle diagnostic feature, which reads, interprets, and reports error codes generated by the vehicle's onboard computers.

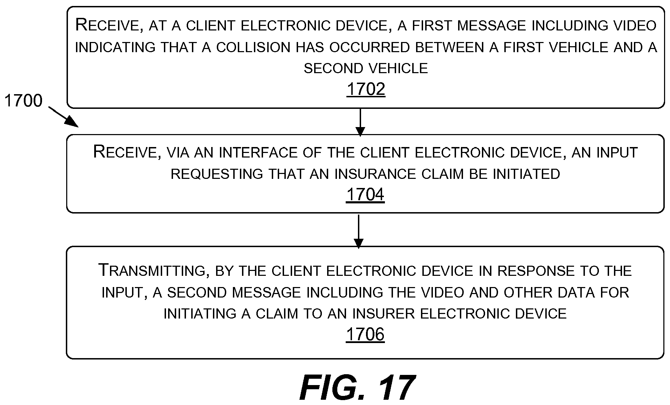

FIG. 17 is a flow chart illustrating an example method 1700 of initiating an insurance claim, in embodiments. At an operation 1702, a client electronic device receives a first message, including video (or at least one image) indicating that a collision has occurred between a first vehicle and a second vehicle. The video or at least one image includes the second vehicle, and is captured by a camera associated with the first vehicle.

In an operation 1704, the client electronic device receives, via an interface of the client electronic device, an input requesting that an insurance claim be initiated. At an operation 1706, the client electronic device transmits, in response to the input, a second message including the video (or at least one image) and other data for initiating a claim to an insurer electronic device.

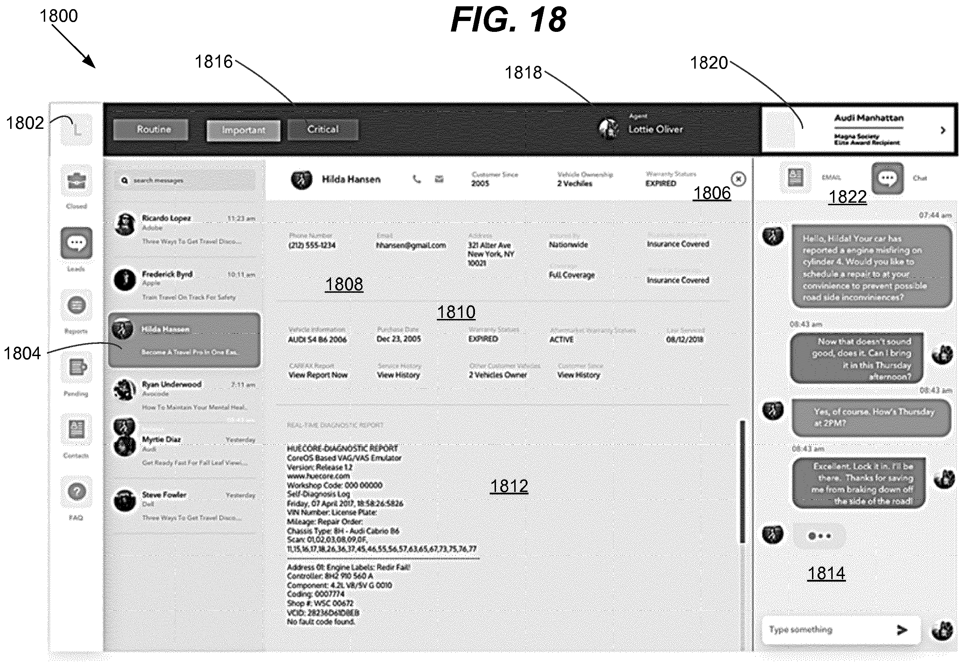

FIG. 18 is an example user interface 1800 for a vehicle maintenance/service organization, in embodiments. The user interface 1800 may be used by any organization that services vehicles, for example, and the user interface 1800 utilizes the real-time access to vehicles diagnostic data generated by the various devices and methods described herein (e.g., the license plate frame electronic devices, the hub electronic device, etc.) such organizations more proactive opportunities to increase their revenue. The hub electronic device, for example, may proactively read a vehicle's data as the multiple sensors of the vehicle report potential mechanical or other issues. The vehicle's data may be received, for example, through an on-board diagnostic (OBD) interface as described herein. This information can be reproduced as diagnostic information 1812 of the user interface 1800. This gives dealerships an advantage to reach out to a potential customer (e.g., the vehicle owner, user) to offer or schedule service for repairs, offer discounts, etc. Other features like vehicle tracking, roadside assistance, and vehicle recovery may also be implemented.

The user interface 1800 further includes navigation buttons 1802, an inbox 1804 relating to different vehicle owners or parties that a dealer is corresponding with, and detailed information about a vehicle owner 1808 and their vehicle 1810. The user interface 1800 also includes more information about a vehicle owner 1806, such as whether that person owns/uses any other vehicles. The user interface 1800 also includes a chat dialog 1814 for interacting with vehicle owners/users, and a chat/email toggle 1822 to switch between emailing and chatting with a vehicle owner/user. The chat dialog 1814 may also be a text message dialog or any other kind of instant messaging service.

The user interface 1800 also includes color codes 1816, so that a user of the interface 1800 can prioritize particular issues for particular vehicle owners/users that are more urgent than others. Information 1818 displays the name and other information of a user of the user interface 1800. And information 1820 displays information about an organization using the user interface 1800.

Accordingly, vehicles equipped with license plate frame electronic device(s) and or a hub electronic device may automatically notify an authorized dealership or service center and vehicle owners of any repairs needed or malfunctions occurring as reported by the vehicle's diagnostic system. Dealerships can therefore proactively respond to the repair notifications by inviting the customer for a service repair. The interface may also help a dealership manage and sort all repair notifications by the relevant level of importance or urgency. For example, that sorting may be done using buttons 1816 of the user interface 1800.

Similarly, a user interface and platform may be implemented for insurers to interact with insurance customers, their vehicles, and data from their vehicles. For example, an API may be used to provide access to insurers with information relating to clients, their vehicles, collisions, location information, etc. Internet of things (IoT) and telematics data may also be utilized with the assistance of a human-enabled artificial intelligence to aid their underwriting process, lower costs and time of claims processing, minimize risk exposure and insurance fraud.

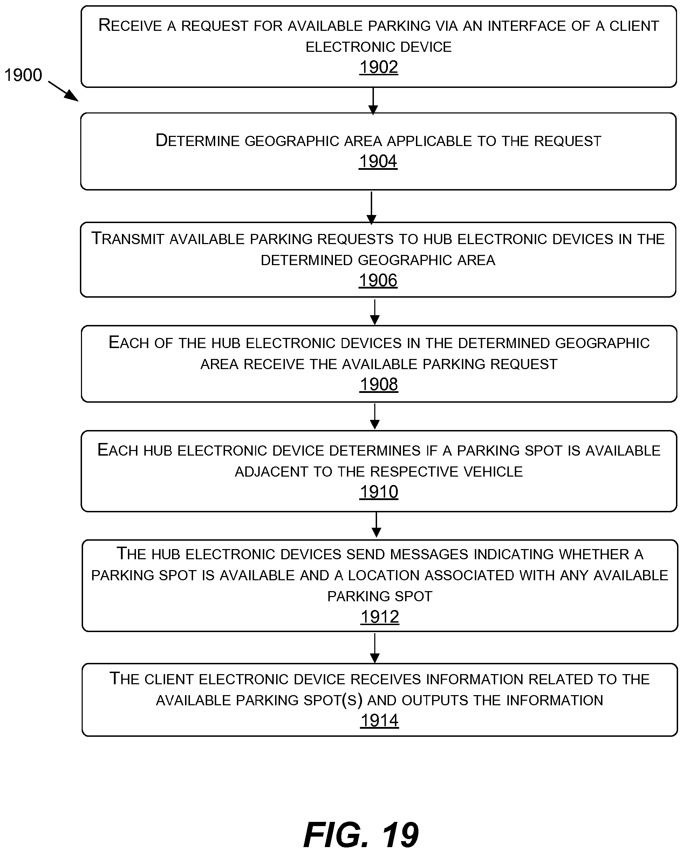

FIG. 19 is a flow chart illustrating an example method 1900 of determining available parking spots, in various embodiments. In particular, the method 1900 uses real-time data reported by the license plate frame electronic devices to determine when and where there is parking available in front of or behind an existing client, along with the ability to report when and if that parking becomes unavailable. The system may also use rules to determine available parking data. For example, if there is a space in front of a car but it is a no parking zone, a rule indicating that that space is a no parking zone will prevent the system from considering it as an available parking spot. Additionally, the method 1900 is not limited to a certain parking setting, and may be implemented for street parking (e.g., parallel parking), in parking garages, in parking lots, etc.

At an operation 1902, a request is received at a client electronic device inquiring about available parking, where the request is received via an interface of the client electronic device. At an operation 1904, a geographic area applicable to the request is determined. This may be a default area based on a current location of the client electronic device, a manually specified area, or any other type of customizable search parameters. At an operation 1906, available parking requests are transmitted to hub electronic devices in the determined geographic area.

At an operation 1908, each of the hub electronic devices in the determined geographic area receive the available parking request. At an operation 1910, each of the hub electronic devices (e.g., by receiving proximity sensor information from license plate frame electronic devices) determines if a parking spot is available adjacent to each respective vehicle. At an operation 1912, the hub electronic devices send messages indicating whether a parking spot is available and a location associated with any available parking spot. In an operation 1914, the client electronic device receives the information related to the available parking spot(s) and outputs the information. In one example, the information is output to a user interface such as a display or speaker so that the client can see or hear the information. In an example, the information is output to another application (e.g., a navigation application of a mobile client electronic device, of a vehicle, of a hub electronic device, etc.) so that the client can begin navigating to the parking spot. This may be particularly convenient if the client is currently driving.

In order to make these parking features work, the proximity sensors and cameras that make up the license plate frame electronic devices may be remotely accessed with a number of requests. One of these requests is to report whether or not a vehicle is parked behind or in front of a vehicle. The system may then place the GPS location of the customer's vehicle, as reported by the devices of the vehicle, on a map to understand if in fact there is a legal parking space. If it is determined that there is a legal parking space available, the location of the parking space is advertised to other clients. Once a client claims the parking location (e.g., by parking in the spot, by inputting on a device that the user is on his or her way to use the spot, etc.), the system can be updated to indicate that the spot is no longer available to other clients. Sensors may also continuously monitor the availability of a parking spot. Should a parking spot become unavailable before a client (or the client that claimed the spot) parks there, an alert may be sent to a device of the client that claimed the spot.

In various embodiments, the devices described herein may also record video all the time or as a vehicle is being operated (e.g., record a journey from point-A to point-B). Additional hardware may also be added, for example, inside the car that perform additional functions and communicate with the other devices described herein. For example, additional sensors and or cameras in, on, inside, etc. the vehicle may be used to warn a driver or vehicle owner/user whether a pet or a child has been forgotten in the vehicle after use. An intrusion detection method may be implemented using similar sensors, for example through the the utilization of the heat and infrasonic sensors.

Additional hardware inside the vehicle may include a mountable screen providing accessibility for a client to configure and interact with all devices described herein and or data collected by those devices. This product may also bring multimedia integration and GPS functionalities with live traffic features. Such a device may also incorporate features of a virtual assistant that responds to voice commands, such as Spotify™, Google Assistant™, Apple's Siri™, and/or Amazon's Alexa™.

FIG. 20 is a diagrammatic view of an illustrative computing system that includes a general purpose computing system environment 120, such as a desktop computer, laptop, smartphone, tablet, or any other such device having the ability to execute instructions, such as those stored within a non-transient, computer-readable medium. Furthermore, while described and illustrated in the context of a single computing system 120, those skilled in the art will also appreciate that the various tasks described hereinafter may be practiced in a distributed environment having multiple computing systems 120 linked via a local or wide-area network in which the executable instructions may be associated with and/or executed by one or more of multiple computing systems 120.

In its most basic configuration, computing system environment 120 typically includes at least one processing unit 122 and at least one memory 124, which may be linked via a bus 126. Depending on the exact configuration and type of computing system environment, memory 124 may be volatile (such as RAM 130), non-volatile (such as ROM 128, flash memory, etc.) or some combination of the two. Computing system environment 120 may have additional features and/or functionality. For example, computing system environment 120 may also include additional storage (removable and/or non-removable) including, but not limited to, magnetic or optical disks, tape drives and/or flash drives. Such additional memory devices may be made accessible to the computing system environment 120 by means of, for example, a hard disk drive interface 132, a magnetic disk drive interface 134, and/or an optical disk drive interface 136. As will be understood, these devices, which would be linked to the system bus 126, respectively, allow for reading from and writing to a hard disk 138, reading from or writing to a removable magnetic disk 140, and/or for reading from or writing to a removable optical disk 142, such as a CD/DVD ROM or other optical media. The drive interfaces and their associated computer-readable media allow for the nonvolatile storage of computer readable instructions, data structures, program modules and other data for the computing system environment 120. Those skilled in the art will further appreciate that other types of computer readable media that can store data may be used for this same purpose. Examples of such media devices include, but are not limited to, magnetic cassettes, flash memory cards, digital videodisks, Bernoulli cartridges, random access memories, nano-drives, memory sticks, other read/write and/or read-only memories and/or any other method or technology for storage of information such as computer readable instructions, data structures, program modules or other data. Any such computer storage media may be part of computing system environment 120.

A number of program modules may be stored in one or more of the memory/media devices. For example, a basic input/output system (BIOS) 144, containing the basic routines that help to transfer information between elements within the computing system environment 120, such as during start-up, may be stored in ROM 128. Similarly, RAM 130, hard drive 138, and/or peripheral memory devices may be used to store computer executable instructions comprising an operating system 146, one or more applications programs 148 (such as a Web browser, retailer's mobile app, retailer's point-of-sale checkout and ordering program, and/or other applications that execute the methods and processes of this disclosure), other program modules 150, and/or program data 152. Still further, computer-executable instructions may be downloaded to the computing environment 120 as needed, for example, via a network connection.

An end-user, *e.g.,* a customer, retail associate, and the like, may enter commands and information into the computing system environment 120 through input devices such as a keyboard 154 and/or a pointing device 156. While not illustrated, other input devices may include a microphone, a joystick, a game pad, a scanner, etc. These and other input devices would typically be connected to the processing unit 122 by means of a peripheral interface 158 which, in turn, would be coupled to bus 126. Input devices may be directly or indirectly connected to processor 122 via interfaces such as, for example, a parallel port, game port, firewire, or a universal serial bus (USB). To view information from the computing system environment 120, a monitor 160 or other type of display device may also be connected to bus 26 via an interface, such as via video adapter 162. In addition to the monitor 160, the computing system environment 120 may also include other peripheral output devices, not shown, such as speakers and printers.

The computing system environment 120 may also utilize logical connections to one or more computing system environments. Communications between the computing system environment 120 and the remote computing system environment may be exchanged via a further processing device, such a network router 172, that is responsible for network routing. Communications with the network router 172 may be performed via a network interface component 174. Thus, within such a networked environment, e.g., the Internet, World Wide Web, LAN, or other like type of wired or wireless network, it will be appreciated that program modules depicted relative to the computing system environment 120, or portions thereof, may be stored in the memory storage device(s) of the computing system environment 120.

The computing system environment 120 may also include localization hardware 176 for determining a location of the computing system environment 120. In embodiments, the localization hardware 176 may include, for example only, a GPS antenna, an RFID chip or reader, a WiFi antenna, or other computing hardware that may be used to capture or transmit signals that may be used to determine the location of the computing system environment 120.

While this disclosure has described certain embodiments, it will be understood that the claims are not intended to be limited to these embodiments except as explicitly recited in the claims. On the contrary, the instant disclosure is intended to cover alternatives, modifications and equivalents, which may be included within the spirit and scope of the disclosure. Furthermore, in the detailed description of the present disclosure, numerous specific details are set forth in order to provide a thorough understanding of the disclosed embodiments. However, it will be obvious to one of ordinary skill in the art that systems and methods consistent with this disclosure may be practiced without these specific details. In other instances, well known methods, procedures, components, and circuits have not been described in detail as not to unnecessarily obscure various aspects of the present disclosure.

Some portions of the detailed descriptions of this disclosure have been presented in terms of procedures, logic blocks, processing, and other symbolic representations of operations on data bits within a computer or digital system memory. These descriptions and representations are the means used by those skilled in the data processing arts to most effectively convey the substance of their work to others skilled in the art. A procedure, logic block, process, etc., is herein, and generally, conceived to be a self-consistent sequence of steps or instructions leading to a desired result. The steps are those requiring physical manipulations of physical quantities. Usually, though not necessarily, these physical manipulations take the form of electrical or magnetic data capable of being stored, transferred, combined, compared, and otherwise manipulated in a computer system or similar electronic computing device. For reasons of convenience, and with reference to common usage, such data is referred to as bits, values, elements, symbols, characters, terms, numbers, or the like, with reference to various embodiments of the present invention.

It should be borne in mind, however, that these terms are to be interpreted as referencing physical manipulations and quantities and are merely convenient labels that should be interpreted further in view of terms commonly used in the art. Unless specifically stated otherwise, as apparent from the discussion herein, it is understood that throughout discussions of the present embodiment, discussions utilizing terms such as "determining" or "outputting" or "transmitting" or "recording" or "locating" or "storing" or "displaying" or "receiving" or "recognizing" or "utilizing" or "generating" or "providing" or "accessing" or "checking" or "notifying" or "delivering" or the like, refer to the action and processes of a computer system, or similar electronic computing device, that manipulates and transforms data. The data is represented as physical (electronic) quantities within the computer system's registers and memories and is transformed into other data similarly represented as physical quantities within the computer system memories or registers, or other such information storage, transmission, or display devices as described herein or otherwise understood to one of ordinary skill in the art.

Numbered statements defining the invention are provided as follows
1. A method comprising:
   determining, by at least one processor of an electronic device associated with a first vehicle, that a collision has occurred between the first vehicle and a second vehicle;
   capturing, by a camera associated with the first vehicle, at least one image of the second vehicle; and
   transmitting, by the at least one processor, a message to a client electronic device associated with the first vehicle in response to the determination that the collision has occurred, wherein the message comprises the at least one image of the second vehicle.
2. The method of statement 1, further comprising:
   determining, by the at least one processor, a distance between the first vehicle and the second vehicle over time before the collision; and
   determining, by the at least one processor, that the distance is below a first predetermined threshold at a first time before the collision.
3. The method of statement 2, wherein:
   the at least one image of the second vehicle is captured in response to determining that the distance is below the first predetermined threshold and
   the at least one image of the second vehicle is captured before the collision occurs.
4. The method of statement 1, wherein the at least one image is captured after the collision occurs.
5. The method of statement 1, wherein the first vehicle is parked when the collision occurs.
6. The method of statement 1, wherein the first vehicle is switched off when the collision occurs.
7. The method of statement 1, wherein the at least one image comprises a license plate mounted to the second vehicle.
8. The method of statement 1, further comprising determining, by the at least one processor, a portion of the first vehicle that the second vehicle collided with, wherein the message further comprises data indicating the portion of the first vehicle that the second vehicle collided with.
9. The method of statement 1, further comprising determining, by the at least one processor, an impact force of the collision experienced by the first vehicle during the collision, wherein the message further comprises data indicating the impact force.
10. An apparatus comprising:
   a memory;
   at least one processor operatively coupled to the memory; and
   a set of instructions stored on the memory and configured to be executed by the at least one processor to cause the at least one processor to:
      determine that a collision has occurred between a first vehicle and a second vehicle;
      capture, by a camera associated with the first vehicle, at least one image of the second vehicle; and
      transmit a message to a client electronic device associated with the first vehicle in response to the determination that the collision has occurred, wherein the message comprises the at least one image of the second vehicle.
11. The apparatus of statement 10, wherein the apparatus is electronically connected to an on-board diagnostic (OBD) port of the first vehicle.
12. The apparatus of statement 10, wherein the apparatus comprises a license plate frame electronic device and a hub electronic device that are in wireless communication with each other, and further wherein:
   the license plate frame electronic device comprises the camera,
   the at least one image is transmitted wirelessly from the license plate frame electronic device to the hub electronic device, and
   the hub electronic device transmits the message to the client electronic device.
13. The apparatus of statement 10, wherein the camera is attached to a license plate frame attached to the first vehicle.
14. The method of statement 13, wherein the license plate frame comprises electronic locking components configured to:
   lock the license plate frame to the first vehicle or
   unlock the license plate frame from the first vehicle.
15. The method of statement 14, wherein the set of instructions is further configured to cause the at least one processor to:
   receive an instruction to lock or unlock the license plate frame from the client electronic device; and
   lock or unlock the license plate frame in response to the instruction.
16. A system comprising a vehicle electronic device and a client electronic device wherein:
   the vehicle electronic device:
      determines that a collision has occurred between a first vehicle and a second vehicle, wherein the vehicle electronic device is on or in the first vehicle;
      captures, by a camera, at least one image of the second vehicle; and
      transmits a first message to the client electronic device associated with the first vehicle in response to the determination that the collision has occurred, wherein the first message comprises the at least one image of the second vehicle;
   the client electronic device:
      receives the first message from the vehicle electronic device;
      receives, via an interface, an input requesting that an insurance statement be initiated; and
      transmits, in response to the input, a second message to an insurer electronic device, wherein the second message comprises the at least one image and data for initiating an insurance statement.
17. The system of statement 16, wherein the first message further comprises first location information of the first vehicle at the time of the collision and the client electronic device further:
   determines a second location information of the client electronic device at the time of the collision; and
   transmits the first location information and the second location information to the insurer electronic device as part of or in addition to the second message.
18. The system of statement 16, wherein the at least one image of the second vehicle captured by a camera is a video of the second vehicle captured during the collision, and further wherein the client electronic device plays the video on a display of the client electronic device.
19. The system of statement 16, wherein the first message further comprises at least one of an indication of a portion of the first vehicle that the second vehicle collided with or an indication of an impact force of the collision experienced by the first vehicle during the collision.
20. The system of statement 16, wherein the input is a first input, and wherein the client electronic device further transmits a third message to a law enforcement electronic device in response to a second input, wherein the third message comprises the at least one image and data for initiating a police report.
21. The system of statement 16, wherein the vehicle electronic device comprises a license plate frame electronic device and a hub electronic device, and further wherein:
   the license plate frame electronic device captures the at least one image and sends the at least one image to the hub electronic device and
   the hub electronic device transmits the first message to the client electronic device.
22. A license plate frame apparatus configured to attach to a first vehicle comprising:
   a license plate receiving portion configured to house a license plate of the first vehicle;
   an electronic device housing configured not to block information displayed by the license plate of the first vehicle within the license plate receiving portion, further wherein the electronic device housing encloses at least:
      a camera;
      a memory;
      at least one processor operatively coupled to the memory; and
      a set of instructions stored on the memory and configured to be executed by the at least one processor to cause the at least one processor to:
         determine that a collision has occurred between the first vehicle and a second vehicle;
         capture, by the camera, at least one image of the second vehicle; and
         transmit a message to a hub electronic device of the first vehicle in response to the determination that the collision has occurred, wherein the message comprises the at least one image of the second vehicle.
23. The license plate frame apparatus of statement 22, further comprising electronic locking components configured to
   lock the license plate frame to the first vehicle or
   unlock the license plate frame from the first vehicle.
24. The license plate frame apparatus of statement 23, wherein the set of instructions is further configured to cause the at least one processor to:
   receive an instruction to lock or unlock the license plate frame from the client electronic device; and
   lock or unlock the license plate frame in response to the instruction.
25. The license plate frame apparatus of statement 22, wherein the set of instructions is further configured to cause the at least one processor to determine a portion of the first vehicle that the second vehicle collided with, wherein the message further comprises data indicating the portion of the first vehicle that the second vehicle collided with.
26. The license plate frame apparatus of statement 22, an impact force of the collision experienced by the first vehicle during the collision, wherein the message further comprises data indicating the impact force.
27. The license plate frame apparatus of statement 22, wherein the license plate frame apparatus is configured to attach to a license plate frame base, and further wherein the license plate frame base is configured to attach to the first vehicle.
28. The license plate frame apparatus of statement 27, wherein the license plate frame base comprises an attachment mechanism for attaching the license plate frame base to the vehicle, and further wherein the license plate frame apparatus is configured to block the attachment mechanism when the license plate frame apparatus is attached to the license plate frame base such that the attachment mechanism cannot be accessed to detach the license plate frame from the vehicle when the license plate frame apparatus is attached to the license plate frame base.

## Claims

1. A method comprising:
determining, by at least one processor of an electronic device associated with a first vehicle, that a collision has occurred between the first vehicle and a second vehicle;
capturing, by a camera associated with the first vehicle, at least one image of the second vehicle; and
transmitting, by the at least one processor, a message to a client electronic device associated with the first vehicle in response to the determination that the collision has occurred, wherein the message comprises the at least one image of the second vehicle.

2. The method of claim 1, further comprising:
determining, by the at least one processor, a distance between the first vehicle and the second vehicle over time before the collision; and
determining, by the at least one processor, that the distance is below a first predetermined threshold at a first time before the collision.

3. The method of claim 2, wherein:
the at least one image of the second vehicle is captured in response to determining that the distance is below the first predetermined threshold and
the at least one image of the second vehicle is captured before the collision occurs.

4. The method of claim 1, wherein the at least one image is captured after the collision occurs.

5. The method of claim 1, wherein the first vehicle is parked when the collision occurs.

6. The method of claim 1, wherein the first vehicle is switched off when the collision occurs.

7. The method of claim 1, wherein the at least one image comprises a license plate mounted to the second vehicle.

8. The method of claim 1, further comprising determining, by the at least one processor, a portion of the first vehicle that the second vehicle collided with, wherein the message further comprises data indicating the portion of the first vehicle that the second vehicle collided with.

9. The method of claim 1, further comprising determining, by the at least one processor, an impact force of the collision experienced by the first vehicle during the collision, wherein the message further comprises data indicating the impact force.

10. A system comprising a vehicle electronic device and a client electronic device wherein:
the vehicle electronic device:
determines that a collision has occurred between a first vehicle and a second vehicle, wherein the vehicle electronic device is on or in the first vehicle;
captures, by a camera, at least one image of the second vehicle; and
transmits a first message to the client electronic device associated with the first vehicle in response to the determination that the collision has occurred, wherein the first message comprises the at least one image of the second vehicle;
the client electronic device:
receives the first message from the vehicle electronic device;
receives, via an interface, an input requesting that an insurance claim be initiated; and
transmits, in response to the input, a second message to an insurer electronic device, wherein the second message comprises the at least one image and data for initiating an insurance claim.

11. The system of claim 10, wherein the first message further comprises first location information of the first vehicle at the time of the collision and the client electronic device further:
determines a second location information of the client electronic device at the time of the collision; and
transmits the first location information and the second location information to the insurer electronic device as part of or in addition to the second message.

12. The system of claim 10, wherein the at least one image of the second vehicle captured by a camera is a video of the second vehicle captured during the collision, and further wherein the client electronic device plays the video on a display of the client electronic device.

13. The system of claim 10, wherein the first message further comprises at least one of an indication of a portion of the first vehicle that the second vehicle collided with or an indication of an impact force of the collision experienced by the first vehicle during the collision.

14. The system of claim 10, wherein the input is a first input, and wherein the client electronic device further transmits a third message to a law enforcement electronic device in response to a second input, wherein the third message comprises the at least one image and data for initiating a police report.

15. The system of claim 10, wherein the vehicle electronic device comprises a license plate frame electronic device and a hub electronic device, and further wherein:
the license plate frame electronic device captures the at least one image and sends the at least one image to the hub electronic device and
the hub electronic device transmits the first message to the client electronic device.
